# EUROPÄISCHE PATENTSCHRIFT

(11) **EP 3 601 807 B1**
(45) Veröffentlichungstag und Bekanntmachung des Hinweises auf die Patenterteilung: **19.05.2021**
(21) Anmeldenummer: 18723703.7
(22) Anmeldetag: 22.03.2018
(51) Int. Cl.: F15B 11/20, F16K 31/56, F15B 13/06, F16K 11/10, F16K 11/18

(54) **STEUEREINHEIT FÜR EINE STEUERUNGSVORRICHTUNG FÜR EIN SCHWERLAST-FAHRZEUG, INSBESONDERE FÜR EINEN SCHWANENHALS, EINE HUBANORDNUNG ODER EINE LENKANORDNUNG EINES SCHWERLAST-FAHRZEUGS, SOWIE EINE DERARTIGE STEUERUNGSVORRICHTUNG**
CONTROL UNIT FOR A CONTROL DEVICE FOR A HEAVY DUTY VEHICLE, ESPECIALLY FOR A SWAN NECK ARM, A LIFT ARRANGEMENT OR A STEERING ARRANGEMENT OF A HEAVY DUTY VEHICLE, AND SUCH A CONTROL DEVICE
UNITÉ DE COMMANDE POUR UN DISPOSITIF DE COMMANDE POUR UN VÉHICULE LOURD, EN PARTICULIER POUR UN COUPLE DE BALANÇOIRE, UN AGENCEMENT DE LEVAGE OU UN DISPOSITIF DE DIRECTION D'UN VÉHICULE LOURD ET UN TEL DISPOSITIF DE COMMANDE

(30) Priorität: 23.03.2017 DE 102017002784; 23.03.2017 DE 202017001550 U
(43) Veröffentlichungstag der Anmeldung: 05.02.2020
(73) Patentinhaber: Scheuerle Fahrzeugfabrik GmbH, 74629 Pfedelbach (DE)
(72) Erfinder: HOBUSCH, Mathias, 74629 Pfedelbach (DE)
(74) Vertreter: Leitner, Waldemar
(86) Internationale Anmeldenummer: PCT/EP2018/025068
(87) Internationale Veröffentlichungsnummer: WO 2018/171948

(56) Entgegenhaltungen:
- DE-A1- 3 243 366
- DE-B- 1 226 843
- FR-A1- 2 345 649
- US-A- 3 294 120
- US-A- 3 415 284

## Beschreibung

Die Erfindung betrifft eine Steuereinheit für eine Steuerungsvorrichtung für ein Schwerlast-Fahrzeug nach dem Oberbegriff des Anspruchs 1, eine Steuerungsvorrichtung für ein Schwerlast-Fahrzeug nach dem Oberbegriff des Anspruchs 9 sowie ein Verfahren zur Steuerung einer hydraulisch angetriebenen Baugruppe nach dem Oberbegriff des Anspruchs 13.

Schwerlast-Fahrzeuge mit einem Schwanenhals werden seit vielen Jahren weitverbreitet beim Transport von schweren und/oder sperrigen Lasten eingesetzt und dienen dazu, ein Zugfahrzeug mit einem von diesem gezogenen Schwerlast-Fahrzeug, insbesondere ein Schwerlast-Anhänger, zu koppeln. Der Schwanenhals dient hierbei unter anderem auch dazu, die auf ein Chassis des Zugfahrzeugs einwirkende Sattellast zu übertragen, so dass in Abhängigkeit von der vom Schwerlast-Fahrzeug zu befördernden Last eine hinreichend gute Traktion des Zugfahrzeugs gewährleistet ist. Diese auf das Zugfahrzeug einwirkende Sattellast darf aber auch nicht so groß sein, dass dessen zulässige Achslast überschritten wird. Um nun das Verhältnis zwischen der auf das Zugfahrzeug abgetragenen Last und den Radlasten des vom Zugfahrzeug gezogenen Schwerlast-Fahrzeugs aufeinander abstimmen zu können, ist z. B. bei dem aus der EP 1 816 059 A1 der Anmelderin bekannten Schwerlast-Fahrzeug vorgesehen, dass dem Schwanenhals eine Verdränger-Anordnung zugeordnet ist, deren Hydraulikdrücke auf die vom Schwanenhals auf das Zugfahrzeug abgetragenen Lasten bestimmen. Hierzu müssen einzelne Komponenten des Schwanenhalses dynamisch zueinander bewegt werden. Zu diesem Zweck werden diese Komponenten des Schwanenhalses bewegende Hydraulikzylinder eingesetzt, denen ein entsprechendes Druckmedium gesteuert zugeführt ist. Nicht nur beim Fahrbetrieb, sondern auch beim An- bzw. Absatteln des Schwanenhalses sowie beim Rangierbetrieb ist eine Bewegung des Schwanenhalses erforderlich. Dies bedingt jeweils, dass die einzelnen Komponenten des Schwanenhalses gleichzeitig und in einer definierten Reihenfolge eine gewisse Bewegung ausführen, um die vom Schwanenhals insgesamt zu durchlaufende Bewegung realisieren zu können. Die einzelnen Hydraulikzylinder, die jeweils für die Bewegung einer oder mehrerer Komponenten des Schwanenhalses zuständig sind, müssen folglich in einer definierten Abfolge angesteuert werden. Bis jetzt erfolgt dies dadurch, dass der Fahrer des Schwerlast-Fahrzeugs eine Anzahl von Steuerventilen in einer definierten Reihenfolge öffnet und schließt, so dass die jeweils von einem dieser Steuerventile angesteuerten Hydraulikzylinder eine entsprechende Betätigungsbewegung der entsprechenden Komponenten des Schwanenhalses durchführen. Diese manuelle Korrelation der einzelnen Hydraulikzylinder ist nicht nur zeitaufwendig, sondern aufgrund der Komplexität der meisten der mit dem Schwanenhals durchzuführenden Bewegungen auch anfällig gegen etwaige Fehlbedienungen.

Es ist zwar denkbar, diese Korrelation der einzelnen Steuerventile mittels einer elektronischen Steuerung durchzuführen. Dies wird aber von einer Vielzahl von Anwendern nicht favorisiert, da Schwerlast-Transportfahrzeuge oft in einer rauhen Arbeitsumgebung betrieben werden. Außerdem besteht die Befürchtung, dass bei einem Ausfall oder einer Störung der Elektronik die Funktionsweise des Schwanenhalses empfindlich gestört ist.

Von einem Zugfahrzeug gezogene oder selbstfahrende Schwerlast-Fahrzeuge wie Schwerlast-Anhänger werden oft mit einer aktiven Radlenkung ausgestattet, um das Rangieren zu erleichtern, indem einzelne Radanordnungen individuell gelenkt werden können. Um diese Lenkbewegung der Radanordnungen durchführen zu können, werden auch hier Hydraulikzylinder eingesetzt, die an entsprechenden Lenkeinheiten der Radanordnungen ansetzen. Ein Schwerlast-Anhänger weist in der Regel eine Vielzahl von Radanordnungen auf. Um nun eine gewisse Bahnkurve durchlaufen zu können, ist es wiederum erforderlich, die einzelnen Radanordnungen hinsichtlich ihrer Lenkbewegung zu korrelieren. Auch hierzu muss der Fahrer des Fahrzeugs wiederum beim Rangierbetrieb in einer definierten Abfolge eine gewisse Anzahl von Steuerventilen für die Hydraulikzylinder der Radanordnungen betätigen. Die gleiche Problematik wie bei der vorstehend beschriebenen Bewegung eines Schwanenhalses tritt auch hier in entsprechender Art und Weise auf.

Aus der AT 376 940 B ist eine Lenkbremseinrichtung für einen hydraulisch bremsbaren Schlepper bekannt, die eine Steuereinrichtung aufweist, die durch Verdrehen einer Welle mittels eines Handhebels betätigbar ist, den Hauptbremszylinder abwechselnd mit dem rechten, dem linken oder beiden Hinterradbremszylindern des hydraulisch bremsbaren Schleppers verbindet, wobei die Welle in entsprechenden Winkelstellungen durch federbelastete Rasteinrichtungen gesichert ist. Es ist vorgesehen, dass der Handhebel gegen die Kraft einer Feder in Richtung der Welle schwenkbar ist und in seiner Mittelstellung unter der Wirkung dieser Feder in einer Ausnehmung eines am Schlepper feststehenden Rastteils liegt. Die Steuereinrichtung weist ein Lenkbremsventil auf, das über den Handhebel betätigt wird, der über eine Wippe einen Betätigungskolben nach unten drückt, der seinerseits einen Dichtkolben mitnimmt. Wird nun eine Zuleitung, durch die eine Hydraulikflüssigkeit zuführbar ist, durch eine entsprechende Bewegung des Handhebels mit dem Hauptzylinder in Verbindung gesetzt, presst der Druck der Haupthydraulikflüssigkeit den Bremskolben gegen die Wirkung der Feder an seinen Sitz und eine zur rechten Bremse führende Druckleitung ist gesperrt. Es wird somit nur das von einer weiteren Druckleitung versorgte linke Hinterrad gebremst. Gleichzeitig wird der Betätigungskolben unter der gemeinsamen Wirkung der Feder und des Hydraulikdruckes im Dichtkolben nach oben verschoben, wodurch er die Betätigung einer Kugel und einer Raste, die bei der Voreinstellung des Handhebels hergestellt worden war, löst, so dass der Handhebel nicht mehr in seiner ausgeschwenkten Stellung verriegelt ist und er nach einem Abbau des Bremsdrucks durch die Feder in die Null-Stellung zurückgeschwenkt werden kann. Durch eine Bewegung des Handhebels in eine entgegengesetzte Richtung wird in entsprechender Art und Weise über die Wippe ein weiterer Betätigungskolben nach unten gedrückt, der einen weiteren Dichtkolben mitnimmt, wodurch in entsprechender Art und Weise das von einer weiteren Druckleitung versorgte rechte Hinterrad gebremst wird. Durch eine entsprechende Betätigungsbewegung des Handhebels kann somit das über die Zuleitung der Steuereinrichtung zugeführte Hydraulikmedium wahlweise zum linken oder zum rechten Bremskolben geleitet werden. Die bekannte Steuereinrichtung erlaubt daher nur ein Umverteilen der Bremsflüssigkeit von einem von einer Zuführung auf zwei unterschiedliche Kreise, nämlich auf einen das linke Hinterrad bremsenden ersten Kreis und einen das rechte Hinterrad bremsenden zweiten Kreis. Eine korrelierte Steuerung zweier unabhängiger Hydraulikkreisläufe ist mit der bekannten Steuereinrichtung nicht möglich.

Die DE 32 43 366 A1 beschreibt eine Steuereinrichtung für eine hydraulische Brems- und Lenkbremsanlage für Kraftfahrzeuge, die im Zusammenwirken mit einem Hauptzylinder einerseits bei Lenkvorgängen unter Zuhilfenahme einer Radbremse die entsprechende Radbremse auswählt und andererseits im Fall einer Lenkbremsung die Radbremsen der nicht lenkbremsbaren Fahrzeugachse abschaltet. Die Steuereinrichtung weist zwei normalerweise geöffnete, alternativ verschließbare Ventildurchgänge zwischen einem Hauptzylinder und jeweils einer Radbremse einer lenkbremsbaren Fahrzeugachse auf, wobei die Schließkörper der Ventildurchgänge an Dichtkolben angeformt sind, die ihrerseits in axialer Richtung von einer Schaltwippe verschiebbar sind.

Die bekannte Steuereinrichtung weist einen dritten Ventildurchgang auf, durch den eine Verbindung zwischen dem Hauptzylinder und Radbremsen einer nicht lenkbremsbaren Fahrzeugachse steuerbar ist, wobei der dritte Ventildurchgang in eine Schließstellung gelangt, wenn einer der ersten oder zweiten Ventildurchgänge die Schließposition einnimmt. Dadurch ist sichergestellt, dass sich die beschriebene Steuereinrichtung nach der Durchführung einer Lenkbremsung selbständig wieder in eine Normal-Bremsstellung schaltet, so dass weitestgehend ausgeschlossen ist, dass Lenkbremsungen unbeabsichtigt durchgeführt werden.

Auch bei der bekannten Steuereinrichtung ist wiederum vorgesehen, dass ein lediglich über einen Zugang zugeführtes Hydraulikmedium zu zwei unterschiedlichen Ausgängen umgeleitet wird.

Aus der EP 1 816 059 A1 der Anmelderin ist ein Schwerlast-Fahrzeug mit einem zur Kupplung des Schwerlast-Fahrzeugs an einem Zugfahrzeug auf dieses aufsattelbaren Schwanenhals bekannt. Dem Schwanenhals ist eine hydraulische Verdrängeranordnung zugeordnet, deren Hydraulikdrücke die vom Schwanenhals auf das Zugfahrzeug abgetragene Last bestimmen. Es sind mehrere hydraulisch mit der Verdrängeranordnung kommunizierende Radstützaggregate vorgesehen.

Die Verdrängeranordnung weist Positiv- und Negativkammern auf, die in vorgebbarer Kombination mit den Radstützaggregaten und/oder einem relativ drucklosen Hydraulikreservoir verbindbar sind.

Die vorstehend beschriebene Konstruktion steht in Zusammenhang mit dem Problem, das Verhältnis zwischen der auf das Zugfahrzeug abgetragene Last und den Radlasten derjenigen Räder des Schwerlast-Fahrzeugs, die den mit der Verdrängeranordnung des Schwanenhalses kommunizierenden Radabschließaggregaten zugeordnet sind, verändern zu können. Sie beruht auf dem allgemeinen Gedanken, die dem Schwanenhals zugeordnete Verdrängeranordnung als Mehrkammersystem auszubilden, wobei die Hydraulikdrücke in den Positivkammern zu Stellkräften führen, die den von den Hydraulikdrücken in den anderen Kammern bewirkten Stellkräften entgegenwirken. Es wird also lediglich eine Umschaltventilanordnung benötigt, um die verschiedenen Kammem der Verdrängeranordnung in unterschiedlichen Kombinationen entweder mit dem relativ drucklosen Hydraulikreservoir oder den Radabstützaggregaten zu verbinden.

Die US 3,294,120 beschreibt eine Steuerungsvorrichtung, die einen Grundkörper besitzt, der einen Eingang für ein Druckmedium aufweist. Dieses über den Eingang der Steuerungsvorrichtung zugeführte Druckmedium wird zwei Ausgängen zugeführt, an die ein hydraulischer Aktuator anschließbar ist. Das von diesem Aktuator rückströmende Druckmedium wird jeweils zu einem weiteren Eingang geführt. Das Gehäuse weist eine zylindrische Bohrung auf, welche im Gehäuse drehbar gelagert ist. In dieser Bohrung sind fünf Kammern ausgebildet, indem in der vorgenannten Bohrung ringförmige Abstandshalter und vier zwischen diesen angeordnete Federelemente vorgesehen sind. Die in axialer Richtung mittlere Kammer ist über eine sich verzweigende Leitung mit Spulen/Ventilen verbunden, welche Öffnungen der Leitung durch die Wirkung der in ihnen angeordneten Federn verschließt, Diese Öffnungen werden geöffnet, wenn die elektrischen Spulen der Ventile spannungsbeaufschlagt werden. Ein Ausgang des Steuerventils steht mit einer Leitung in Verbindung und belüftet eine Kammer. Wenn die Spule spannungsbeaufschlagt wird, wird ein Kolben druckbeaufschlagt. In entsprechender Art und Weise steuert das weitere Steuerventil den Druck in einer weiteren Kammer, so dass ein dem vorgenannten Kolben entsprechender weiterer Kolben druckbeaufschlagt wird. Die Kolben sind mit Kolbenstangen verbunden. In einer neutralen Position der entsprechenden Kolben treten die zylindrischen äußeren Bereiche der Kolbenstangen mit einem hinreichenden Freiraum durch Durchgänge hindurch und beaufschlagen verschiebbar Dichtringe zwischen den Kammern und den weiteren Kammern. Die beiden Kolbenstangen sind mittels einer koaxialen Stange verbunden, deren Ende lose in axiale Bohrungen der Kolbenstangen aufgenommen sind. Diese Kolbenstangenanordnung wird durch zwei Zentrierfedern zusammengehalten, welche sich gegen Endplatten des Gehäuses abstützen. In der vorstehend beschriebenen Position ist eine Verbindung zwischen dem Eingang und den beiden Ausgängen durch Ventilelemente unterbunden, wobei die Kolbenstangen die vorgenannten Ausgänge von den Rückfluss-Eingängen trennen. Wenn die Spule des weiteren Steuerventils spannungsbeaufschlagt wird, so wird - wie vorstehend beschrieben - das Druckmittel in die weitere Kammer geleitet, welches bewirkt, dass der weitere Kolben gegen einen federnden Anschlag eines Rings gepresst wird. Der weitere Kolben schiebt dann die weitere Kolbenstange gegen die mittlere Kammer und öffnet dadurch die Verbindung zwischen dem Druckmitteleingang des Gehäuses und dem weiteren Ausgang, da hierdurch das weitere Ventilelement von seinem Sitz unter gleichzeitiger Kompression einer weiteren Feder abgehoben wird. Das andere Ventilelement bleibt in seiner Geschlossen-Stellung, aber die Stange schiebt die erste Kolbenstange aus dem Dichtring, wodurch eine Verbindung zwischen dem ersten Ausgang und dem dazugehörigen Rückfluss-Eingang geöffnet wird. Wenn das weitere Steuerventil nicht mehr spannungsbeaufschlagt ist, wird die weitere Kammer mit dem Ausgang des weiteren Steuerventils verbunden, so dass das Druckmedium aus dieser weiteren Kammer abfließt und die Federn in ihre Ausgangsposition zurücckehren. Hierdurch ist dann der Durchgang zwischen dem Eingang und dem Ausgang geschlossen. Der zweite Kreislauf, welcher durch das Steuerventil gesteuert wird, funktioniert entsprechend.

Die Funktionsweise dieser Steuerungsvorrichtung ist daher derart, dass, um einen Hydraulikkreislauf zwischen dem Eingang und einem zugehörigen Ausgang zu öffnen, das entsprechende Steuerventil spannungsbeaufschlagt wird, so dass die elektrische Spule dieses Steuerventils aktiviert wird. Dies bewirkt dann, dass das der Vorrichtung über den Eingang zugeführte Druckmedium über die Leitung zu einer Kammer geleitet wird, die dann druckbeaufschlagt ist und einen Zylinder beaufschlagt, der entsprechend verschoben wird, so dass ein Durchgang zwischen dem Eingang und dem Ausgang geöffnet und geschlossen wird. Dies erfolgt dadurch, dass ein Durchgang zwischen der mittleren Kammer, in welche die das Druckmedium zuführende Leitung mündet, und der daran anschließenden Kammer geöffnet und geschlossen wird, indem der Teil vom Anschlag wegbewegt wird, so dass der Durchgang von der mittleren Kammer zu der daran anschlie-βenden Kammer geöffnet und geschlossen wird. Simultan wird der Durchgang durch den Dichtring zwischen den weiteren Kammern geschlossen, indem der konisch verjüngte Teil verschoben wird.

Die US 3,415,284 beschreibt ein Klappenventil in einem 3-Wege-Ventil, welches ein Gehäuse mit drei Anschlüssen aufweist, welche in Kammern münden. Ein Durchgang zwischen zwei Kammern wird von einer Klappe gesteuert. Die Klappe ist dabei derart ausgebildet, dass sie in ihrer Geschlossen-Stellung, in der der Durchgang zwischen den beiden vorgenannten Kammern verschlossen ist, durch die Wirkung des in einer der beiden Kammern befindlichen Druckmediums in ihre Geschlossen-Stellung gedrückt wird. Eine zweite Klappe ist zwischen einer der beiden vorgenannten Kammern und einer weiteren Kammer angeordnet. Die beiden Klappen sind mittels einer verschiebbaren Stange verbunden. Das Gehäuse weist einen Steuereingang für ein Steuer-Druckmittel auf. Wird ein derartiges Druckmittel zugeführt, so bewirkt dies, dass sich die Stange samt den mit ihr befestigten Klappen bewegt, wodurch die Durchgänge zwischen den entsprechenden Kammern geöffnet oder geschlossen werden.

Es ist daher Aufgabe der vorliegenden Erfindung, eine Steuereinheit sowie eine Steuerungsvorrichtung für ein Schwerlast-Fahrzeug, insbesondere für eine Baugruppe eines derartigen Fahrzeugs, wie ein Schwanenhals, eine Hubanordnung oder eine aktiv gelenkte Radanordnung, zu schaffen, welche in einfacher Art und Weise eine gleichzeitige Ansteuerung mindestens zweier getrennter Hydraulickreisläufe ermöglicht. Außerdem soll das eingangs genannte Verfahren derart weitergebildet werden, dass in einfacher Art und Weise eine gleichzeitige Ansteuerung mindestens zweier getrennter Hydraulikkreisläufe ermöglicht wird.

Diese Aufgabe wird bei einer gattungsgemäßen Steuereinheit erfindungsgemäß dadurch gelöst, dass der Grundkörper mindestens zwei weitere Anschlussöffnungen mindestens eines zweiten Hydraulikkreislaufs besitzt, an die weitere Leitungen für ein Hydraulikmedium anschließbar sind, wobei ein dritter Kanal von einer dritten Anschlussöffnung zu einer dritten Kammer und ein vierter Kanal von einer vierten Anschlussöffnung zu einer vierten Kammer führt, wobei ein Durchgang zwischen diesen beiden Kammern dieses zweiten Hydraulikkreislaufs durch ein weiteres Ventilelement öffen- und schließbar ist, dass in einem Aufnahmeraum des Grundkörpers der Steuereinheit ein von einem Betätigungsorgan bewegbares, auf einer Betätigungswelle angeordnetes Steuerelement vorgesehen ist, welches mindestens ein Steuerprofil aufweist, welches oder welche in Wirkeingriff mit den Ventilelementen steht oder stehen, und dass durch eine durch die Drehbewegung der Betätigungswelle bewirkte Bewegung des Steuerelements das Ventilelement des ersten Hydraulikkreislaufs und korreliert hierzu das weitere Ventilelement des mindestens einen zweiten Hydraulikkreislaufs durch das oder die Steuerprofile zumindest von einer ersten Steuerposition in eine zweite Steuerposition bewegbar sind.

Die Lösung der Aufgabe erfolgt zudem durch eine gattungsgemäße Steuerungsvorrichtung zur Steuerung und/oder Regelung von mindestens zwei Hydraulickreisläufen, bei welcher erfindungsgemäß die oder mindestens eine der Steuereinheiten wie vorstehend definiert ausgebildet ist oder sind.

Des weiteren erfolgt die Lösung der Aufgabe durch ein gattungsgemäßes Verfahren zur Steuerung einer hydraulisch angetriebenen Baugruppe, bei welchem erfindungsgemäß zur Steuerung und/oder Regelung der in mindestens zwei Hydraulikkreisläufen fließenden Hydraulikmedien eine Steuerungsvorrichtung wie vorstehend definiert verwendet wird.

Durch die erfindungsgemäßen Maßnahmen wird in vorteilhafter Art und Weise eine Steuereinheit, eine Steuerungsvorrichtung und ein Verfahren zur Steuerung und/oder Regelung mindestens zweier Hydraulikkreisläufe geschaffen, welche es in vorteilhafter Art und Weise erlauben, zwei oder mehr Hydraulikkreisläufe korreliert zu steuern und/oder zu regeln. Die erfindungsgemäßen Maßnahmen erlauben in vorteilhafter Art und Weise nicht nur die Umverteilung eines der Steuereinheit über einen Zugang zugeführten Hydraulikmediums auf zwei unterschiedliche Ausgänge der Steuereinheit bzw. der diese Steuereinheit verwendenden Steuerungsvorrichtung. Vielmehr gestatten die erfindungsgemäßen Maßnahmen es in vorteilhafter Art und Weise, mindestens zwei voneinander unabhängige Hydraulikkreisläufe korreliert zu steuern und/oder zu regeln. Durch eine entsprechende Wahl des oder der Steuerprofile des Steuerelements, welche das Ventilelement und das mindestens eine weitere Ventilelement der erfindungsgemäßen Steuereinheit beaufschlagen, ist es insbesondere möglich, dass bei einer entsprechenden Bewegung des Betätigungselements ein Hydraulikkreislauf geschlossen oder geöffnet und zeitlich dazu korreliert der mindestens eine zweite Hydraulikkreislauf z. B. ganz oder zumindest teilweise geöffnet bzw. geschlossen wird. In vorteilhafter Art und Weise erlauben es die erfindungsgemäßen Maßnahmen, mittels einer Steuereinheit und folglich mit einer diese Steuereinheit verwendenden Steuerungsvorrichtung mit nur einer Steuereinheit mehr als zwei Hydraulikkreisläufe zu steuern und/oder zu regeln. Durch eine entsprechende Ausgestaltung des oder der Steuerprofile der erfindungsgemäßen Steuereinheit ist eine Vielzahl von unterschiedlichen Schaltkombinationen des ersten Hydraulikkreislaufs, des zweiten Hydraulikkreislaufs sowie gegebenenfalls weiterer Hydraulikkreisläufe möglich.

Vorzugsweise ist vorgesehen, dass die erfindungsgemäße Steuerungsvorrichtung mehr als zwei Steuereinheiten aufweist, wobei mindestens zwei Steuereinheiten gleichzeitig von einem Betätigungsorgan der Steuerungsvorrichtung betätigbar sind, wobei insbesondere vorgesehen ist, dass die mindestens zwei Steuereinheiten der erfindungsgemäßen Steuerungsvorrichtung auf einer gemeinsamen Betätigungswelle angeordnet sind. Eine derartige Maßnahme besitzt den Vorteil, dass es hierdurch in einfacher Art und Weise möglich wird, mittels einer entsprechenden Anzahl von Steuereinheiten eine Vielzahl von Hydraulikkreisläufen gleichzeitig korreliert zu steuern und/oder zu regeln.

Vorteilhafte Weiterbildungen der Erfindung sind Gegenstand der Unteransprüche.

Weitere Einzelheiten und Vorteile der Erfindung sind den Ausführungsbeispielen zu entnehmen, welche im Folgenden anhand der Figuren beschrieben werden. Es zeigen:
- Figur 1: ein Ausführungsbeispiel einer Steuerungsvorrichtung in einer perspektivischen Darstellung,
- Figur 2: ein Längsschnitt durch die Steuerungsvorrichtung der Figur 1,
- Figur 3: die Steuerungsvorrichtung der Figur 1 zusammen mit Anschlussleitungen,
- Figur 4: eine Ausführungsform einer Betätigungswelle der Steuerungsvorrichtung der Figur 1,
- Figur 5: eine erste Ausführungsform einer hydraulischen Steuereinheit für die Steuerungsvorrichtung der Figur 1,
- Figur 6: eine perspektivische Ansicht eines Grundkörpers der Steuereinheit der Figur 5,
- Figur 7: einen Längsschnitt durch die Steuereinheit der Figur 5,
- Figur 8: einen Querschnitt durch die Steuereinheit der Figur 5 in einer ersten Schaltposition,
- Figur 9: einen Querschnitt durch die Steuereinheit der Figur 5 in einer zweiten Schaltposition,
- Figur 10: einen Querschnitt durch die Steuereinheit der Figur 5 in einer dritten Schaltposition,
- Figur 11: eine Seitenansicht der Steuereinheit der Figur 5,
- Figur 12: eine perspektivische Ansicht einer Drehdurchführung der Steuereinheit der Figur 5,

- Figuren 13 und 13a: eine perspektivische Darstellung des Steuerelements der Steuereinheit der Figur 5,
- Figur 14: eine zweite Ausführungsform einer Steuereinheit für eine Verwendung als Wegeventil,
- Figur 15: das Ausführungsbeispiel der Figur 14 in einer ersten Schaltposition,
- Figur 16: das Ausführungsbeispiel der Figur 14 in einer zweiten Schaltposition,
- Figur 17: einen Längsschnitt durch die Steuereinheit der Figur 14,
- Figur 18: einen Querschnitt durch die Steuereinheit der Figur 14,
- Figur 19: ein Querschnitt durch die Steuereinheit der Figur 14 in einer ersten Schaltposition,
- Figur 20: ein Querschnitt durch die Steuereinheit der Figur 14 in einer zweiten Schaltposition, und
- Figuren 21 und 21a: eine perspektivische Darstellung des Steuerelements der Steuereinheit der Figur 14.

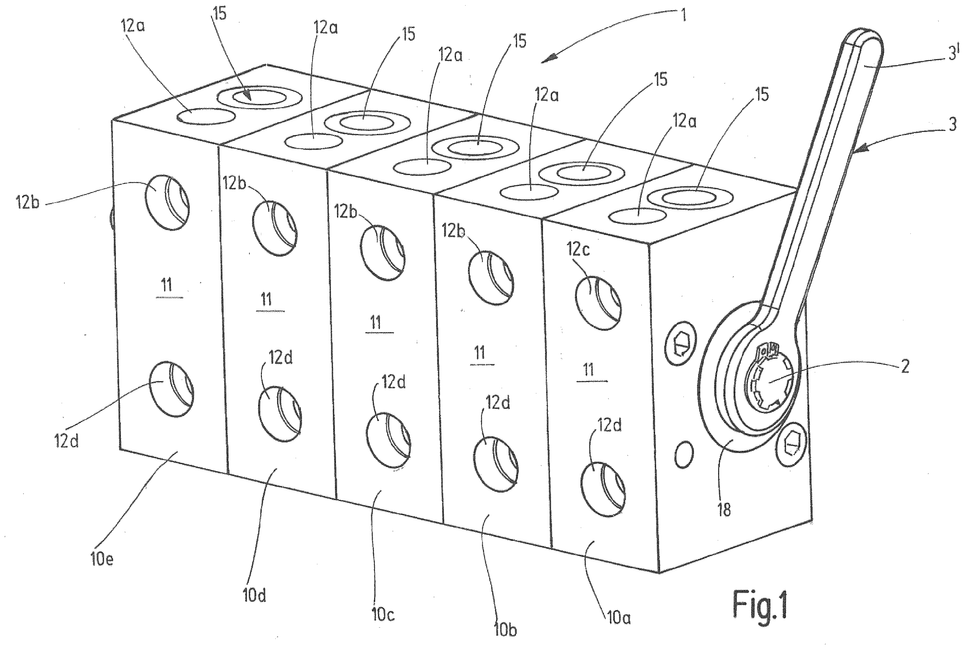

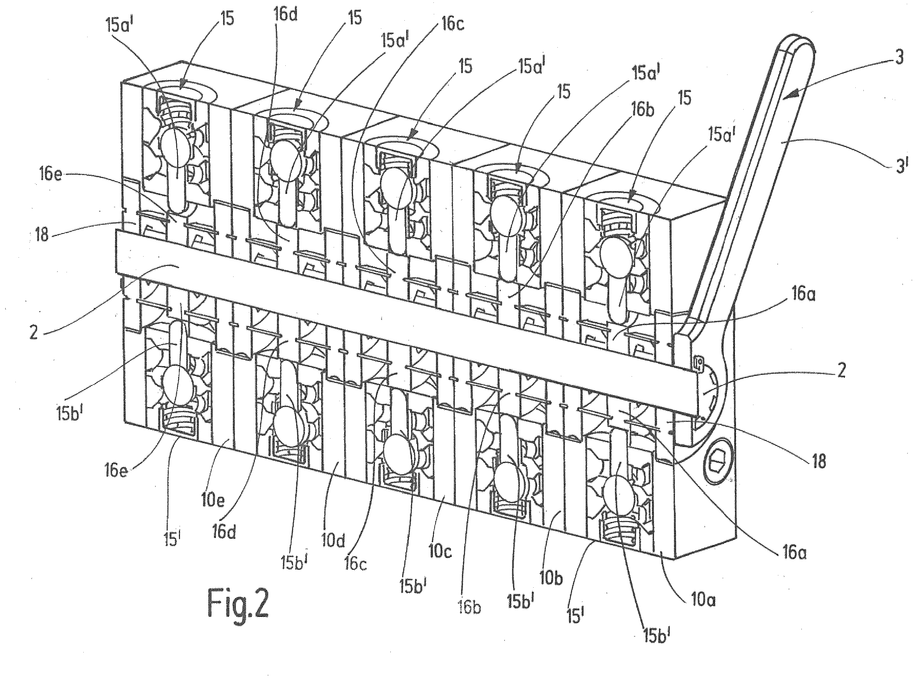

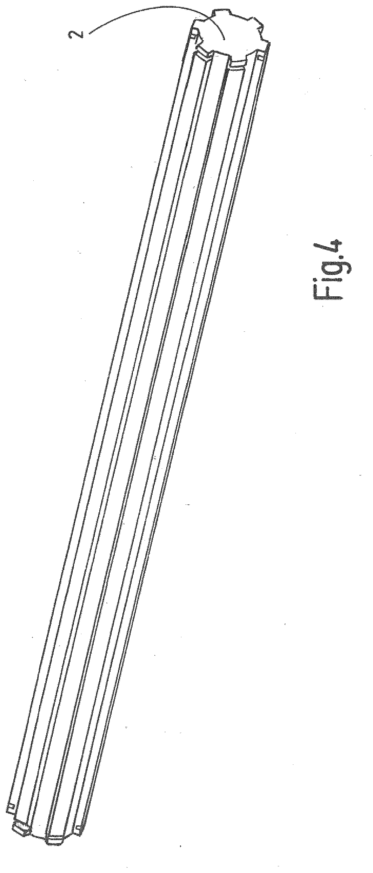

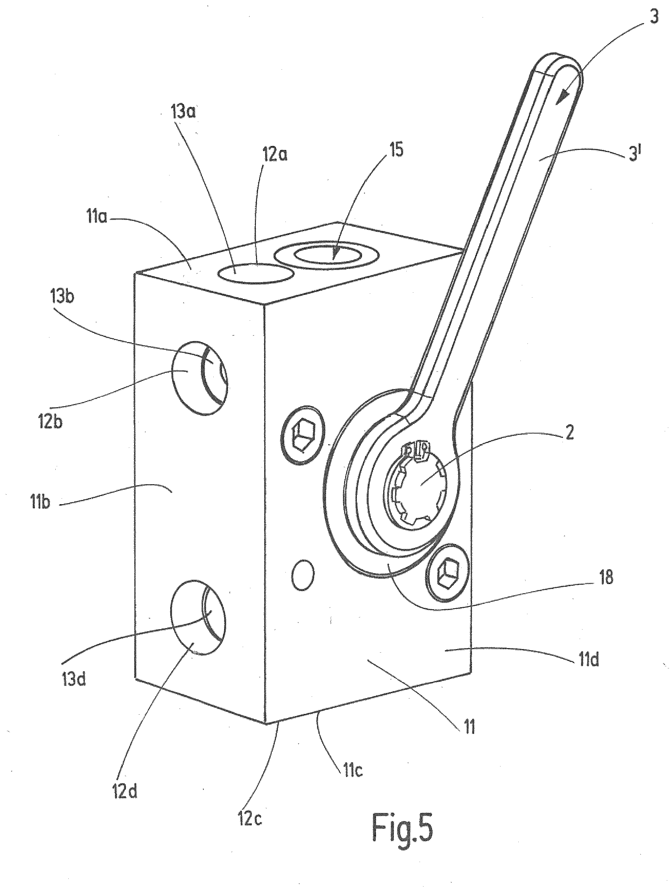

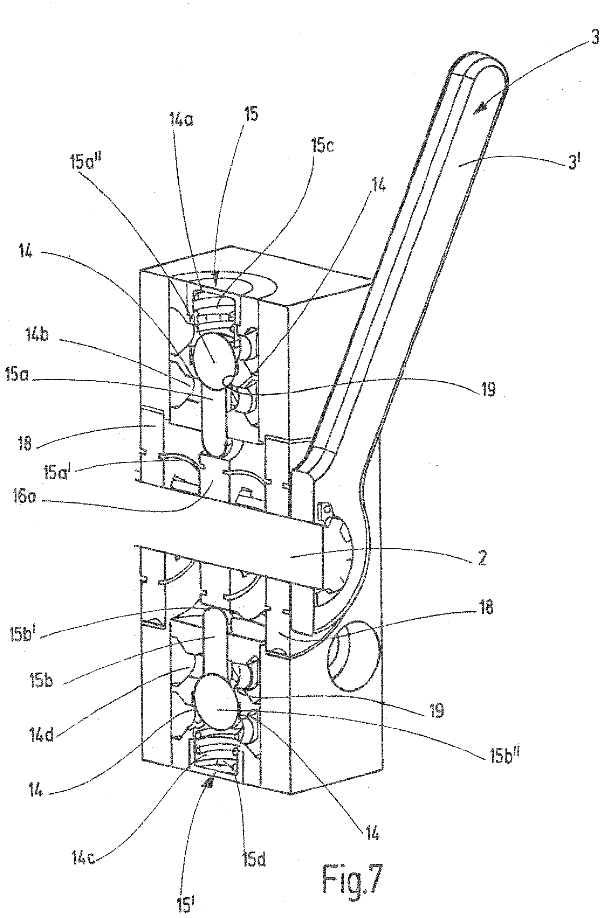

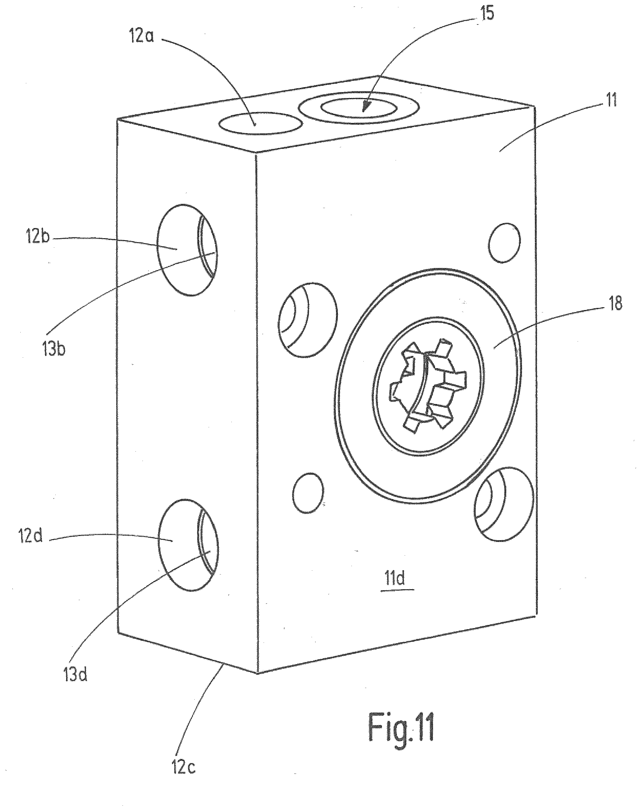

In den Figur 1 bis 4 ist ein Ausführungsbeispiel einer hydraulischen Steuerungsvorrichtung 1 dargestellt, welche eine Anzahl von - im hier beschriebenen Ausführungsbeispiel: fünf - hydraulischen Steuereinheiten 10a-10e aufweist, welche - wie aus der Schnittdarstellung der Figur 2 ersichtlich ist - über eine gemeinsame Betätigungswelle 2 (siehe Figur 4) miteinander gekoppelt sind, die von einem Betätigungsorgan 3 bewegbar ist. Bevor jedoch der genauere Aufbau und die Funktionsweise der Steuerungsvorrichtung 1 im Detail beschrieben wird, wird der Aufbau und die Funktionsweise einer der fünf hydraulischen Steuereinheiten 10a-10e erläutert, aus denen sich die hydraulische Steuerungsvorrichtung 1 der Figuren 1 bis 4 zusammensetzt, anhand der Figuren 5 bis 13 erläutert.

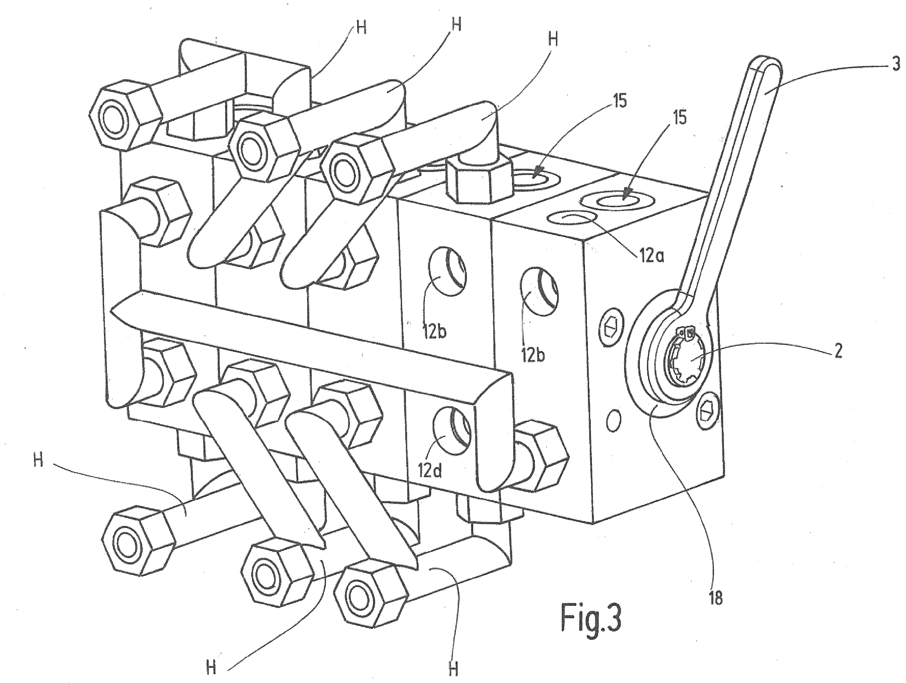

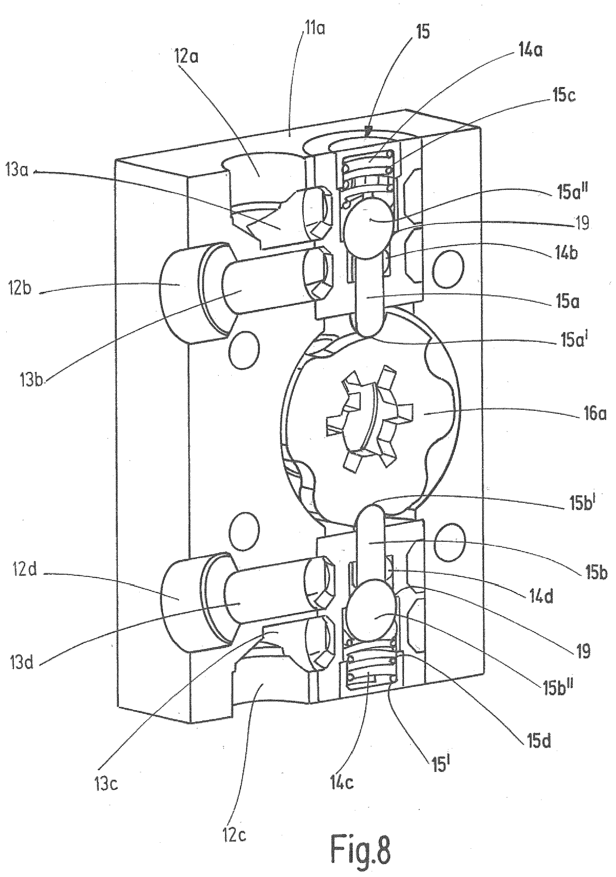

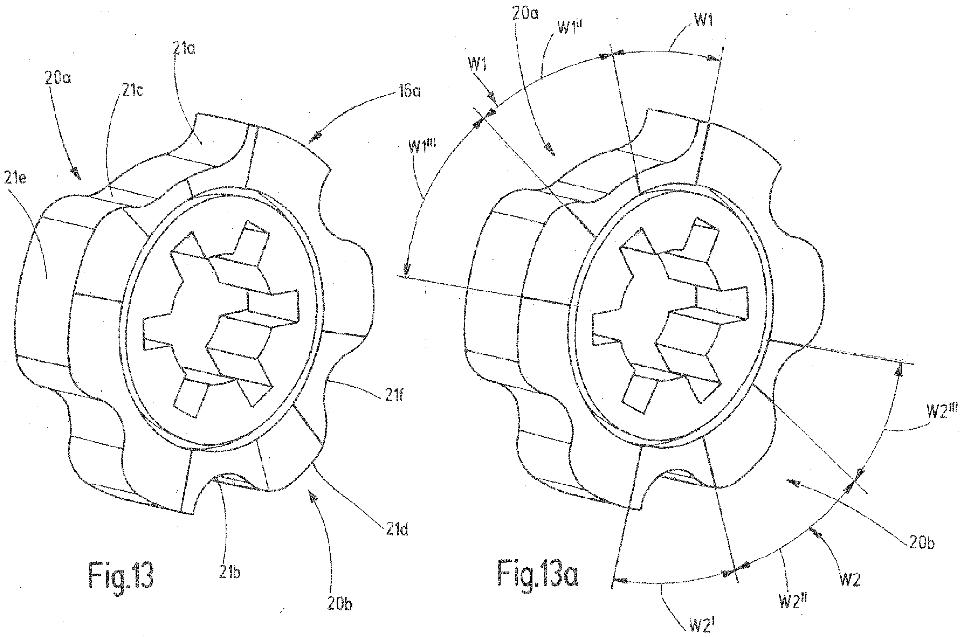

Die Figur 5 zeigt eine perspektivische Darstellung der Steuereinheit 10a der Steuerungsvorrichtung 1. Vorzugsweise sind die weiteren Steuereinheiten 10b-10e gleich aufgebaut. Die Steuereinheit 10a weist einen Grundkörper 11 auf, der - wiederum im hier beschriebenen Ausführungsbeispiel - vier Anschlussöffnungen 12a-12d besitzt, über welche - wie aus der Figur 3 ersichtlich - Hydraulikleitungen anschließbar sind. Wie am besten aus den Figuren 8 bis 10 ersichtlich ist, mündet ein von der ersten Anschlussöffnung 12a eines ersten Hydraulikkreislaufs in einer Oberseite 11a des Grundkörpers 11 ausgehender Kanal 13a in eine erste Kammer 14a. Von der zweiten Anschlussöffnung 12b, welche in einer Seitenfläche 11b des Grundkörpers 11 angeordnet ist, geht ein zweiter Kanal 13b aus, welcher in eine zweite Kammer 14b mündet. In dieser zweiten Kammer 14b ist ein Ventilelement 15a eines Ventils 15 angeordnet, welches - wie nachstehend beschrieben - von dem in Figur 13 perspektivisch dargestellten Steuerelement 16a der Steuereinheit 10a betätigbar ist, so dass durch eine entsprechende Bewegung des Ventilelements 15a in der Kammer 14b ein Durchgang 14 zwischen der ersten und der zweiten Kammer 14a und 14b und somit zwischen dem ersten Kanal 13a und dem zweiten Kanal 13b und folglich zwischen der ersten Anschlussöffnung 12a und der zweiten Anschlussöffnung 12b dieses ersten Hydraulikkreislaufs ganz oder teilweise geöffnet und geschlossen werden kann. Wird das Ventilelement 15a von dem Steuerelement 16a nach oben bewegt, wird dieser Durchgang 14 geöffnet, so dass ein in den Hydraulikleitungen fließendes Hydraulikmedium zwischen der ersten Anschlussöffnung 12a und der zweiten Anschlussöffnung 12b fließen kann. Wird das Ventilelement 15a durch eine an ihm ansetzende Feder 15c zurückbewegt, so ist der Durchgang 14 zwischen den Anschlussöffnungen 12a und 12b verschlossen, mit der Folge, dass ein Fluss des Hydraulikmediums zwischen den beiden Anschlussöffnungen 12a und 12b unterbunden wird. Durch die Bewegung des Steuerelements 16a wird also das Ventilelement 15a von einer ersten Steuerposition, in der - beim hier beschriebenen Ausführungsbeispiel - der Durchgang 14 geöffnet ist, in eine zweite Steuerposition, in der der Durchgang 14 - wiederum beim hier beschriebenen Ausführungsbeispiel - geschlossen ist, bewegt.

In entsprechender Art und Weise ist an einer Unterseite 11c des Grundkörpers 11 eine dritte Anschlussöffnung 12c und an der Seitenfläche 11b eine vierte Anschlussöffnung 12d eines zweiten Hydraulikkreislaufs vorgesehen. Von der Anschlussöffnung 12c führt ein Kanal 13c zu einer dritten Kammer 14c. Von der Anschlussöffnung 12d führt ein Kanal 13d zu einer vierten Kammer 14d, in der ein Ventilelement 15b eines Ventils 15' angeordnet ist welches - wie nachstehend beschrieben - von dem Steuerelement 16a der Steuereinheit 10a betätigbar ist, so dass durch eine entsprechende Verschiebebewegung des Ventilelements 15b in der Kammer 14d ein Durchgang 14' zwischen dem dritten Kanal 13c und dem vierten Kanal 13d und somit zwischen der dritten Anschlussöffnung 12c und der vierten Anschlussöffnung 12d ganz oder teilweise geöffnet und geschlossen werden kann. Wird das Ventilelement 15b von dem Steuerelement 16a nach unten bewegt, wird dieser Durchgang 14' geöffnet, so dass ein in den Hydraulikleitungen fließendes Hydraulikmedium zwischen der dritten Anschlussöffnung 12c und der vierten Anschlussöffnung 12d dieses zweiten Hydraulikkreislaufs fließen kann. Wird das Ventilelement 15b durch die Kraft einer Feder 15d zurückbewegt, so ist der Durchgang zwischen den Anschlussöffnungen 12c und 12d verschlossen, mit der Folge, dass ein Fluss des Hydraulikmediums zwischen den beiden Anschlussöffnungen 12c und 12d unterbunden wird. Durch die Bewegung des Steuerelements 16a wird also wiederum das Ventilelement 15b von einer ersten Steuerposition, in der - wiederum beim hier beschriebenen Ausführungsbeispiel - der Durchgang 14' geöffnet ist, in eine zweite Steuerposition, in der beim hier beschriebenen Ausführungsbeispiel dieser Durchgang geschlossen ist, bewegt.

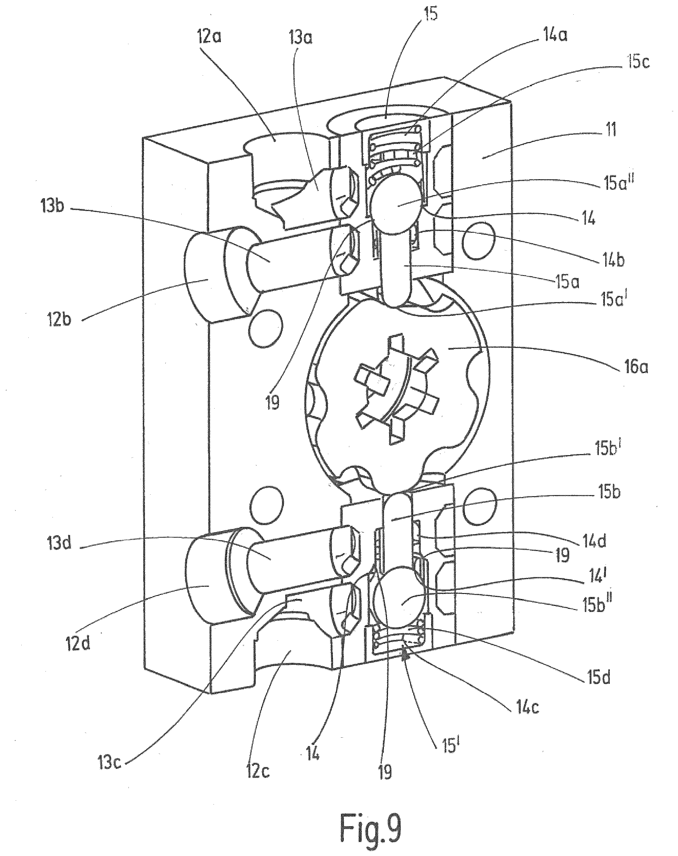

Wie am besten aus den Figuren 8 bis 10 ersichtlich ist, weisen hierbei die Ventilelemente 15a, 15b jeweils ein Schließelement 15a", 15b" auf, welches mit einem entsprechenden Ventilsitz 19 des Gehäuses der zweiten bzw. vierten Kammer 14b bzw. 14c zusammenwirkt. Wird nun das von der Feder 15c bzw. 15d belastete Ventilelement 15a bzw. 15b vom Steuerelement 16a aus seiner Ruhelage ausgelenkt, so wird der Durchgang 14 bzw. 14' zwischen der ersten bzw. dritten Kammer 14a bzw. 14c und der zweiten bzw. vierten Kammer 14b bzw. 14d geöffnet. Eine derartige Konstellation ist am besten aus der Figur 9 ersichtlich: Das Ventilelement 15a befindet sich in seiner unteren Position, das Schließelement 15a" sitzt auf dem Ventilsitz 19 auf, so dass der Durchgang 14 zwischen der ersten Kammer 14a und der zweiten Kammer 14b des ersten Hydraulikkreislaufs verschlossen ist. Das Ventilelement 15b wurde durch das Steuerelement 16a nach unten verschoben, es befindet sich somit in seiner geöffneten Position, mit der Folge, dass der Durchgang 14' zwischen der dritten Kammer 14c und der vierten Kammer 14d des zweiten Hydraulikkreislaufs geöffnet ist, so dass das Hydraulikmedium durch diesen Durchgang 14' strömen und somit ein Fluss dieses Hydraulikmediums zwischen den Anschlussöffnungen 12c und 12d des zweiten Hydraulikkreislaufs ermöglicht ist.

Dem Fachmann ist aus nachfolgender Beschreibung ersichtlich, dass die hier beschriebene Ausgestaltung der Steuereinheit 10 nur exemplarischen Charakter besitzt: So ist es z. B. möglich, dass in eine Kammer 14a-14d mehr als zwei Kanäle 13a-13d münden. Eine derartige Maßnahme ist z. B. dann von Vorteil, wenn das über eine Hydraulikleitung einer Anschlussöffnung, z. B. der Anschlussöffnung 12a, zugeführte Hydraulikmedium des ersten Hydraulikkreislaufs nicht nur zu einem Ausgang, hier der Anschlussöffnung 12b, geführt werden soll, sondern auf mehrere Anschlussöffnung dieses Hydraulikkreislaufs verteilt werden soll. Auch der umgekehrte Fall, nämlich dass mehrere Eingänge eines Hydraulikkreislaufs für das Hydraulikmedium eines Hydraulikkreislaufs zu einem Ausgang geleitet werden sollen, ist denkbar, genauso wie die Konstellation, dass mehrere in eine Kammer 14a-14d mündende Kanäle zu mehreren Ausgängen geleitet werden.

Es ist auch möglich, dass im Grundkörper 11 der Steuereinheit 10a eine Vielzahl von Kammern 14a, 14b, 14c und 14d oder nur zwei Kammern 14a und 14b vorgesehen sind. Dem Fachmann ist aus der hier gegebenen Beschreibung ohne weiteres ersichtlich, wie er diesbezüglich die Steuereinheit 10a auszubilden hat, um eine gewünschte Verteilung des Hydraulikmediums über die einzelnen Eingänge und Ausgänge erzielen kann. Im Folgenden wird aber von der in den Figuren dargestellten Konfiguration ausgegangen, nämlich dass der Grundkörper 11 der Steuereinheit 10a vier Anschlussöffnungen 12a-12d zweier voneinander unabhängiger Hydraulikkreisläufe, die über entsprechende Kanäle 13a-13d in vier Kammern 14a, 14b, 14c, 14d münden, und dass in jeder der beiden Kammern 14b, 14d ein Ventilelement 15a, 15b angeordnet ist, welcher durch das Steuerelement 16a beaufschlagt wird. Dem Fachmann sind die Modifikationen, die er bei einer anderen Ausgestaltung der Steuereinheit 10a vorzunehmen hat, ohne weiteres ersichtlich.

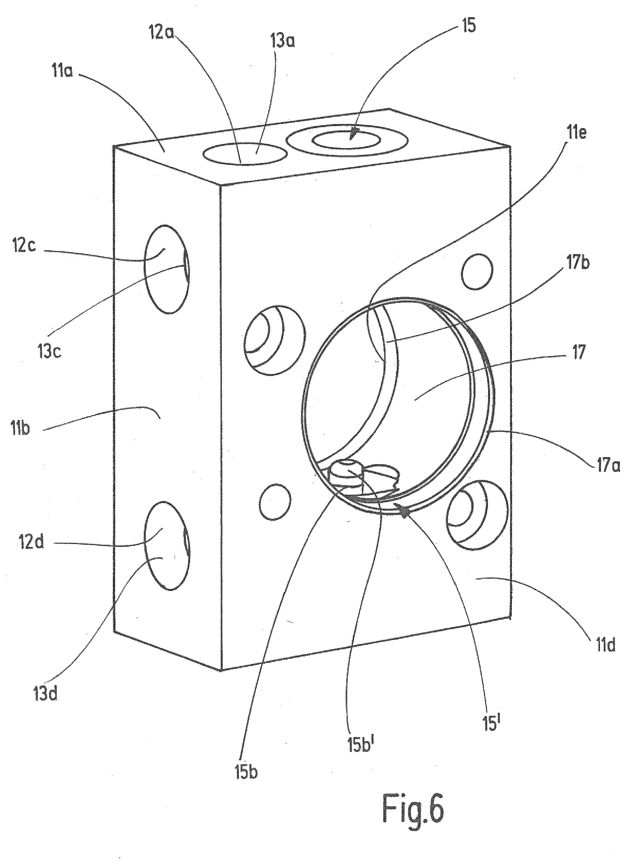

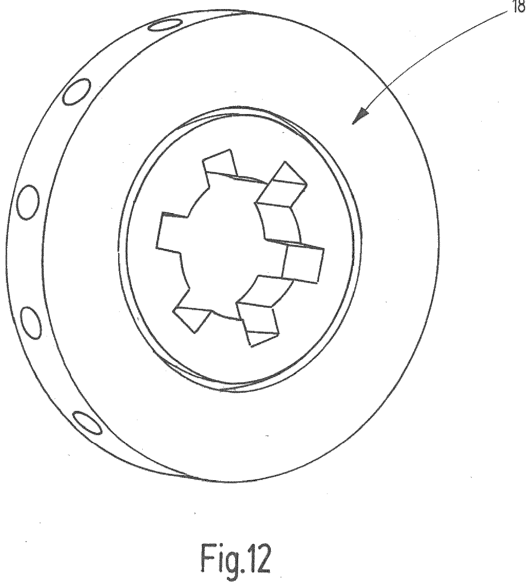

Im Grundkörper 11 ist - wie am besten aus Figur 6 ersichtlich - ein Aufnahmeraum 17 vorgesehen, in welchem das Steuerelement 16a angeordnet ist, welches die in den Kammern 14b und 14d angeordneten Ventilelemente 15a und 15b beaufschlagt. Der Aufnahmeraum 17 steht mit Durchtrittsöffnungen 17a und 17b in Stirnflächen 11d bzw. 11e des Grundkörpers 11 in Verbindung, so dass durch diese Durchtrittsöffnungen 17a, 17b die Betätigungswelle 2 in den Grundkörper 11 der Steuereinheit 10a eingebracht werden kann. Diese Betätigungswelle 2 ist in Drehdurchführungen 18 (siehe Figur 12) gelagert, die jeweils in den beiden Durchtrittsöffnungen 17a, 17b angeordnet sind.

Eine derartige Steuereinheit 10a dient dazu - wie bereits eingangs aufgeführt - mindestens zwei voneinander unabhängige Hydraulikkreisläufe korreliert zu steuern. Der Begriff "Steuern" soll im Rahmen dieser Anmeldung in seiner weitesten Bedeutung verstanden werden und umfasst daher auch ein "Regeln". Beispielsweise soll eine derartige Steuereinheit 10a einen ersten Hydraulikkreislauf einer ersten Hydraulikanordnung, insbesondere einen ersten Hydraulikzylinder, der für eine Bewegung einer ersten Komponente einer hydraulisch angetriebenen Einheit einer Baugruppe des Schwerlast-Fahrzeugs, z. B. einer ersten Komponente eines Schwanenhalses, einer Hubanordnung oder einer aktiven Radlenkung, dient, und korreliert dazu einen zweiten Hydraulikkreislauf, der zur Bewegung einer zweiten Komponente dieser Baugruppe, z. B. einer zweiten Komponente des Schwanenhalses, der Hubanordnung oder der aktiven Radlenkung, dient, steuern. Die erste und die zweite Komponente sollen also in zeitlicher Korrelation gesteuert werden. Hierzu werden die Ventilelemente 15a, 15b der Ventile 15, 15' entsprechend bewegt, so dass durch die Bewegung des Ventilelements 15a der erste Hydraulickreislauf zwischen den Anschlussöffnungen 12a und 12b und durch die Bewegung des zweiten Ventilelements 15b der zweite Hydraulikkreislauf zwischen den Anschlussöffnungen 12c und 12d korreliert geöffnet bzw. geschlossen werden.

Um dies zu bewirken, ist vorgesehen, dass - wie am besten aus den Figuren 13 und 13a ersichtlich - das auf der Betätigungswelle 2 gelagerte und von dem Betätigungsorgan 3, hier einem Handhebel 3', betätigbare Steuerelement 16a für jedes Ventilelement 15a bzw. 15b ein Steuerprofil 20a bzw. 20b aufweist, durch welche eine Bewegung des vom jeweiligen Steuerprofil 20a bzw. 20b beaufschlagten Ventilelements 15a bzw. 15b in Abhängigkeit von der Stellung des Betätigungsorgans 3 erzielbar ist. Das erste Steuerprofil 20a erstreckt sich - wie in Figur 13a dargestellt - über einen ersten Winkelbereich W1 des Steuerelements 16a und das zweite Steuerprofil 20b über einen zweiten Winkelbereich W2. Jeder Winkelbereich W1 bzw. W2 ist dabei mit dem Bewegungsbereich des Betätigungsorgans 3 korreliert, d. h. der erste Winkelbereich W1 beginnt bei einer ersten Endposition des Betätigungsorgans 3 und endet in seiner zweiten Endposition, während der zweite Winkelbereich W2 in dieser zweiten Endposition des Betätigungsorgans 3 beginnt und in dessen erster Endposition endet. Es kann aber vorkommen, dass sich die Winkelbereiche W1 und W2 und somit die Steuerprofile 20a, 20b des Steuerelements 16a überlagern. Zudem ist es möglich, dass sich die Winkelbereiche W1 und W2 der Steuerprofile 20a und 20b des Steuerelementes 16a in zwei oder mehr Schaltpositionen des Betätigungsorganes 3 aufteilen. Die Wirkung und Funktion des Steuerelements 16a wird nun anhand der Figuren 8, 9 und 10 erläutert.

Die Darstellung der Figur 8 zeigt das Steuerelement 16a in einer der ersten Schaltposition des Betätigungsorgans 3 (siehe Figur 1) entsprechenden Stellung, also in seiner ersten Steuerposition. In dieser Stellung des Steuerelements 16a greifen die Betätigungszapfen 15a' und 15b' der Ventilelemente 15a und 15b jeweils in eine Vertiefung 21a bzw. 21b in einem ersten Winkelteilbereich W1' bzw. W2' (siehe Figur 13a) des Winkelbereichs W1 bzw. W2 des ersten bzw. zweiten Steuerprofils 20a bzw. 20b des Steuerelements 16a ein. Die beiden Ventilelemente 15a und 15b befinden sich somit in ihrer untersten Stellung, die Durchgänge 14 bzw. 14' zwischen der ersten Anschlussöffnung 12a und der zweiten Anschlussöffnung 12b des ersten Hydraulikkreislaufs sowie der dritten Anschlussöffnung 12c und der vierten Anschlussöffnung 12d des zweiten Hydraulikkreislaufs sind somit geschlossen, es kann zwischen den Anschlussöffnungen 12a, 12b und 12c, 12d kein Hydraulikmedium strömen, die beiden Hydraulikkreisläufe sind geschlossen.

Wird nun, wie in Figur 9 zu sehen ist, dass das Betätigungsorgan 3 von der ersten Stellung um einen definierten Winkelbereich im Uhrzeigersinn in eine zweite Stellung nach unten bewegt, überträgt sich diese Drehbewegung über die Betätigungswelle 2 auf das drehfest mit der Betätigungswelle 2 verbundene Steuerelement 16a, welches sich dann in Korrelation zum Betätigungsorgan 3 ebenfalls um diesen Winkelbereich in eine zweite Schaltposition bewegt. Bei dieser Bewegung des Betätigungsorgans 3 und somit des Steuerelements 16a gleiten die Betätigungszapfen 15a' und 15b' der Ventilelemente 15a und 15b entlang jeweils eines zweiten Winkelteilbereichs W1" bzw. W2" des Winkelbereichs W1 bzw. W2 der Steuerprofile 20a und 20b des Steuerelements 16a und folgen somit der Kontur dieser Steuerprofile 20a, 20b. In dieser zweiten Stellung des Steuerelements 16a befindet sich der Betätigungszapfen 15a' des Ventilelements 15a in einer Vertiefung 21c des Steuerprofils 20a und der Betätigungszapfen 15b' des Ventilelements 15b auf einer Erhöhung 21d des Steuerprofils 20b. Das Ventilelement 15a befindet sich somit in seiner untersten Stellung während sich das Ventilelement 15b in seiner obersten Stellung befindet. Der Durchgang 14 zwischen der ersten Anschlussöffnung 12a und der zweiten Anschlussöffnung 12b des ersten Hydraulikkreislaufs ist in dieser zweiten Steuerposition der Steuereinheit 10a somit geschlossen, während der Durchgang 14' zwischen der dritten Anschlussöffnung 12c und der vierten Anschlussöffnung 12d des zweiten Hydraulikkreislaufs geöffnet ist. Somit kann zwischen den Anschlussöffnungen 12a und 12b kein Hydraulikmedium strömen, während zwischen den Anschlussöffnungen 12c und 12d ein Hydraulikmedium strömen kann. Der erste Hydraulikkreis 12a-12b ist in dieser zweiten Steuerposition der Steuereinheit 10a geschlossen und der zweite Hydraulikkreis 12c-12d ist geöffnet.

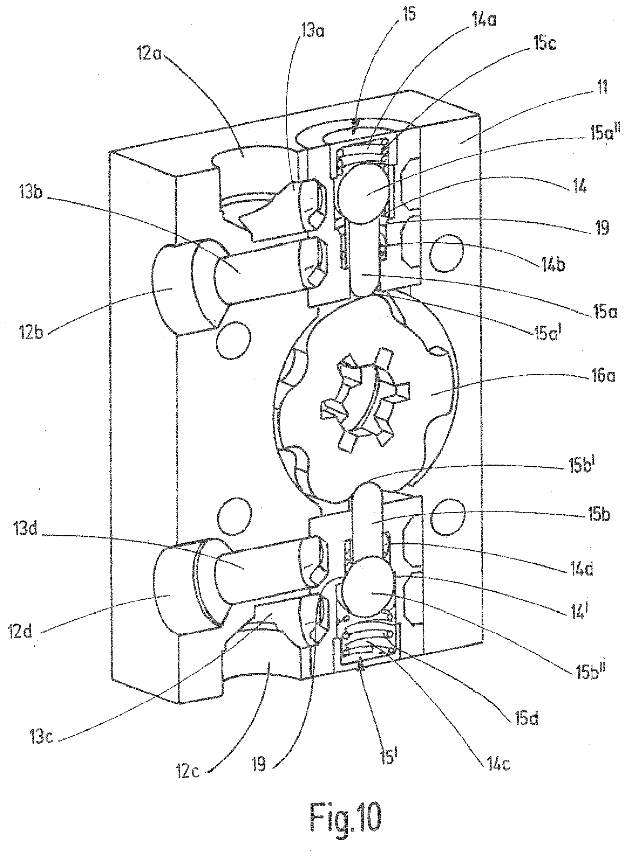

Wird nun, wie in Figur 10 zu sehen ist, dass das Betätigungsorgan 3 von seiner zweiten Stellung um einen definierten Winkelbereich im Uhrzeigersinn in eine dritte Stellung nach unten bewegt, überträgt sich diese Drehbewegung über die Betätigungswelle 2 auf das drehfest mit der Betätigungswelle 2 verbundene Steuerelement 16a, welches sich dann in Korrelation zum Betätigungsorgan 3 um einen dritten Winkelteilbereich W1''' bzw. W2''' des Winkelbereichs W1 bzw. W2 in eine dritte Schaltposition bewegt. Bei dieser Bewegung des Steuerelements 16a gleiten die Betätigungszapfen 15a' und 15b' der Ventilelemente 15a und 15b auf den Steuerprofilen 20a und 20b des Steuerelements 16a auf und folgen somit der Kontur dieser Steuerprofile. In dieser dritten Stellung des Steuerelements 16a befindet sich der Betätigungszapfen 15a' des Ventilelements 15a auf einer Erhöhung 21e des Steuerprofils 20a und der Betätigungszapfen 15b' des Ventilelements 15b in einer Vertiefung 21f des Steuerprofils 20b. Das Ventilelement 15a befindet sich somit in seiner obersten Stellung während sich das Ventilelement 15b in seiner untersten Stellung befindet. Der Durchgang 14 zwischen der ersten Anschlussöffnung 12a und der zweiten Anschlussöffnung 12b des ersten Hydraulikkreislaufs ist somit geöffnet, während der Durchgang 14' zwischen der dritten Anschlussöffnung 12c und der vierten Anschlussöffnung 12d des zweiten Hydraulikkreislaufs geschlossen ist. Somit kann zwischen den Anschlussöffnungen 12a und 12b ein Hydraulikmedium strömen, während zwischen den Anschlussöffnungen 12c und 12d kein Hydraulikmedium strömen kann. Der erste Hydraulikkreis 12a-12b ist in dieser dritten Steuerposition der Steuereinheit 10a geöffnet und der zweite Hydraulikkreis 12c-12d ist geschlossen.

Wird nun das Betätigungsorgan 3 von seiner zuletzt beschriebenen dritten Schaltposition ausgehend in einer der vorstehend beschriebenen Betätigungsrichtung entgegengesetzten zweiten Betätigungsrichtung zurückbewegt, so bewegt sich das drehfest mit dem Betätigungsorgan 3 über die Betätigungswelle 2 verbundene Steuerelement 16a in einer seiner vorstehend beschriebenen ersten Bewegungsrichtung entgegengesetzten zweiten Bewegungsrichtung. Die Ventilelemente 15a, 15b gleiten dann auf den Steuerprofilen 20a, 20b zurück. Während der Rückwärtsbewegung des Steuerelements 16a von der dritten in die zweite Schaltposition bewegt sich somit das Ventilelement 15a von seiner durch die Erhöhung 21e bewirkten obersten Position zu der Vertiefung 21c zurück, wodurch der Durchgang 14 zwischen den Anschlussöffnungen 12a und 12b wieder geschlossen wird. In entsprechender Art und Weise gelangt das zweite Ventilelement 15b während der Rückwärtsbewegung zwischen der dritten und der zweiten Schaltposition in seine durch die Erhebung 21d des zweiten Steuerprofils 20b bewirkte oberste Stellung, so dass in der zweiten Schaltposition des Betätigungsorgans 3 wiederum der zweite Hydraulikkreislauf zwischen den Anschlussöffnungen 12c und 12d geöffnet ist. Bei einer Weiterbewegung des Betätigungsorgans 3 von der zweiten in die erste Schaltposition gleitet das erste Ventilelement entlang des Steuerprofils 20a von der Vertiefung 21c zu der Vertiefung 21a, während sich das zweite Ventilelement 15b von der Erhöhung 21d zu der Vertiefung 21b bewegt, so dass dann in dieser ersten Steuerposition der Steuereinheit 10a wieder beide Hydraulikkreisläufe zwischen den Anschlussöffnungen 12a und 12b bzw. 12c und 12d geschlossen sind.

Dem Fachmann ist aus obiger Beschreibung ersichtlich, dass die hier beschriebenen Fälle - Öffnen und Schließen des Durchgangs 14 zwischen den Anschlussöffnungen 12a und 12b des ersten Hydraulikkreislaufs bei gleichzeitigem Schließen und Öffnen des Durchgangs 14' zwischen den Anschlussöffnungen 12c und 12d des zweiten Hydraulikkreislaufs bei einer Bewegung des Betätigungsorgans 3 zwischen seinen Schaltpositionen - nur exemplarischen Charakter besitzt. Durch eine entsprechende Ausgestaltung des Umfangsprofils des Steuerelements 16a kann eine Vielzahl von Korrelationen zwischen den beiden Durchgängen 14, 14' ausgebildet werden.

Es ist z. B. möglich, dass eines oder mehrere Steuerprofile 20a, 20b derart ausgestaltet sind, dass beim Durchlaufen eines Steuerprofils 20a bzw. 20b das entsprechende Ventilelement 15a bzw. 15b nicht nur - wie vorstehend beschrieben - durch das jeweilige Steuerprofil 20a bzw. 20b von seiner Geschlossen-Position in seine Geöffnet-Position bewegt und während des weiteren Durchlaufens dieses Steuerprofils 20a bzw. 20b in dieser Position verbleibt. Vielmehr kann vorgesehen sein, dass eines oder mehrerer dieser Steuerprofile 20a, 20b segmentiert ausgeführt sind, d. h. dass während des Durchlaufens unterschiedlicher Segmente eines Steuerprofils 20a bzw. 20b das entsprechende Ventilelement 15a bzw. 15b unterschiedliche Bewegungen durchführt. Z. B. kann durch Vorsehen eines aus mehreren halbwellenförmigen, sägezahnförmigen oder dreiecksförmigen Profilsegmenten ein pulsförmiger Verlauf des Fluidstroms erzielt werden.

Die Steuereinheit 10a erlaubt in vorteilhafter Art und Weise die zeitlich korrelierte Steuerung und/oder Regelung zweier und auch mehrerer Hydraulikkreisläufe, da - wie vorstehend erläutert - es grundsätzlich möglich ist, in einem Grundkörper 11 mehrere Kammern 14a, 14b, 14c und 14d vorzusehen.

In der Praxis kann aber eine derartige Lösung hinsichtlich der dann gegebenen Größe der Steuereinheit 10a nachteilig sein, da die Betätigung der durch die hydraulische Steuereinheit 10a angesteuerten Komponenten in der Regel ein gewisser Fluidstrom erforderlich ist, welcher einen entsprechenden Durchmesser der im Grundkörper 11 verlaufenden Kanäle 13a-13d erfordert.

Die in den Figuren 1 bis 4 dargestellte und - im hier gezeigten Fall - aus fünf Steuereinheiten 10a-10e bestehende hydraulische Steuerungsvorrichtung 1 sieht daher vor, dass jede einzelne Steuereinheit 10a-10e nur eine geringe Anzahl von Fluidströmen steuert, bei der in diesen Figuren dargestellten Steuerungsvorrichtung 1 steuert jede Steuereinheit 10a-10e jeweils nur zwei Hydraulikkreisläufe. Geht man nun davon aus, dass die einzelnen Steuereinheiten 10a-10e der Steuerungsvorrichtung 1 derart ausgestaltet sind, dass jede dieser Steuereinheiten 10a-10e zwei Fluidströme steuern kann, so sind durch die Steuerungsvorrichtung 1 grundsätzlich zehn Hydraulikkreisläufe steuerbar, wobei es aber möglich ist, durch eine entsprechende Querverbindung der einzelnen Steuereinheiten 10a-10e weitere Fluidströme zu steuern.

Um nun die Arbeitsweise der einzelnen Steuereinheiten 10a-10e zu korrelieren, ist vorgesehen, dass - wie am besten aus der Figur 2 ersichtlich ist - die einzelnen Steuereinheiten 10a-10e über die gemeinsame Betätigungswelle 2 verbunden sind: Die Betätigungswelle 2 erstreckt sich daher vom Betätigungsorgan 3, welches neben der ersten Steuereinheit 10a angeordnet ist, bis zum Ende der fünften Steuereinheit 10e. Durch eine Betätigung des Betätigungsorgans 3 werden somit über die drehfest mit dem Betätigungsorgan 3 verbundene Betätigungswelle 2 die Steuerelemente 16a-16e der einzelnen Steuereinheiten 10a-10e gleichzeitig bewegt. Jedes Steuerelement 16a-16e der einzelnen Steuereinheiten 10a-10e öffnet oder schließt hierbei entsprechend der auf dem jeweiligen Steuerelement 16a-16e vorgegebenen Steuerprofile 20a-20d.

Die beschriebene Steuerungsvorrichtung 1 erlaubt es somit in vorteilhafter Art und Weise die korrelierte Steuerung einer Vielzahl von Hydraulikkreisläufen mittels einer einzigen Bewegung des Betätigungsorgans 3. Es ist somit in vorteilhafter Art und Weise möglich, durch eine einzige Betätigungsbewegung komplexe Bewegungen der von den jeweiligen Hydraulikanordnungen angetriebenen Komponenten z. B. eines Schwanenhalses einer Hubsteuerung oder einer Radsteuerung, einfach zu steuern. Die beschriebene Steuerungsvorrichtung 1 zeichnet sich somit durch ihre hohe Bediensicherheit aus.

Bei der vorstehenden Beschreibung wurde davon ausgegangen, dass die einzelnen Steuereinheiten 10a-10e als Steuerventile arbeiten. Es ist aber auch möglich, eine derartige Steuereinheit 10a-10e so auszubilden, dass sie als Wegeventil fungiert.

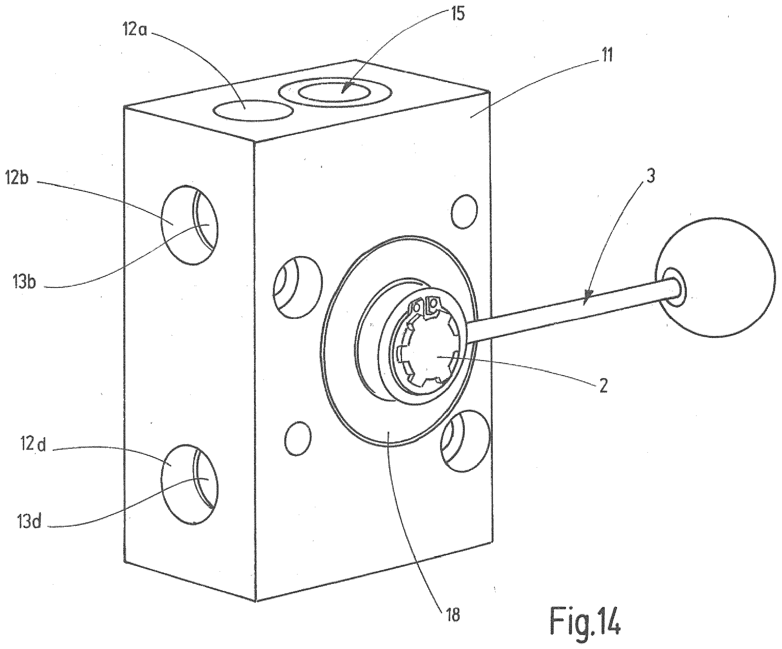

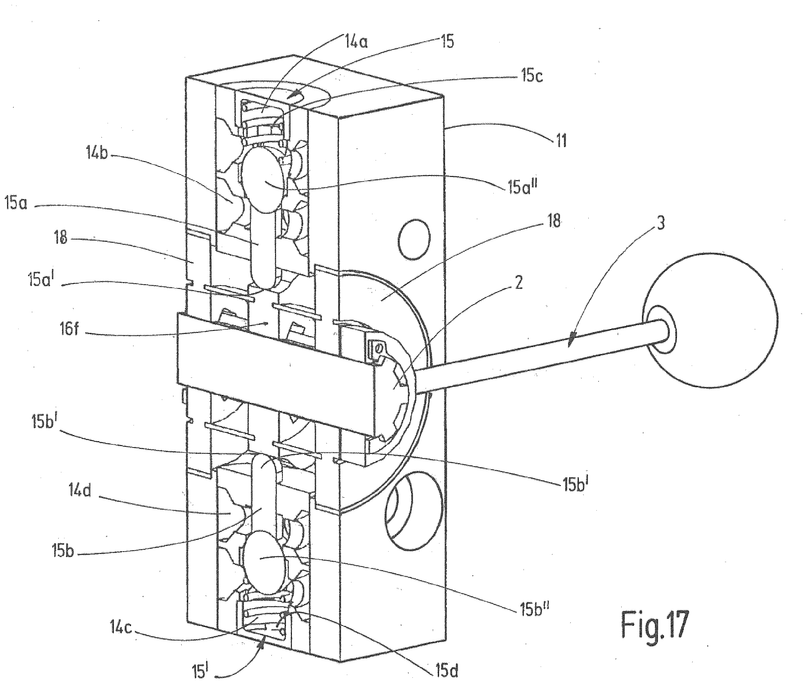

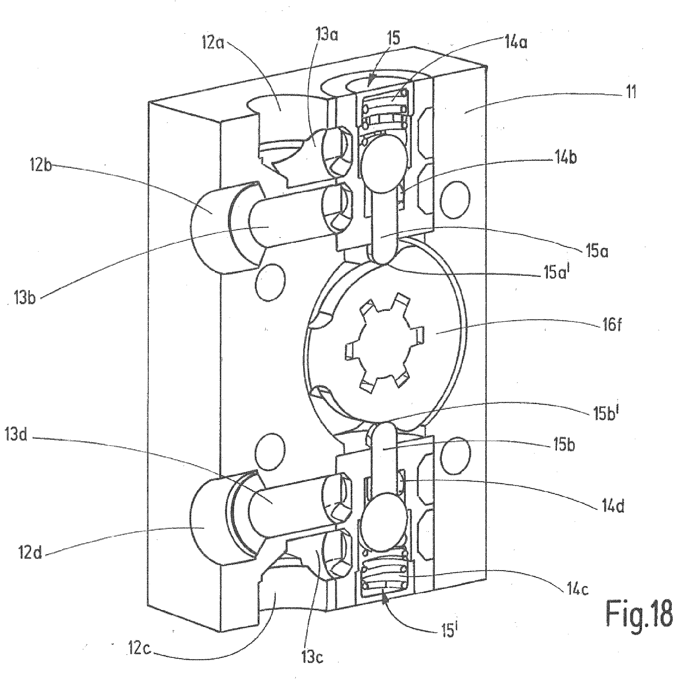

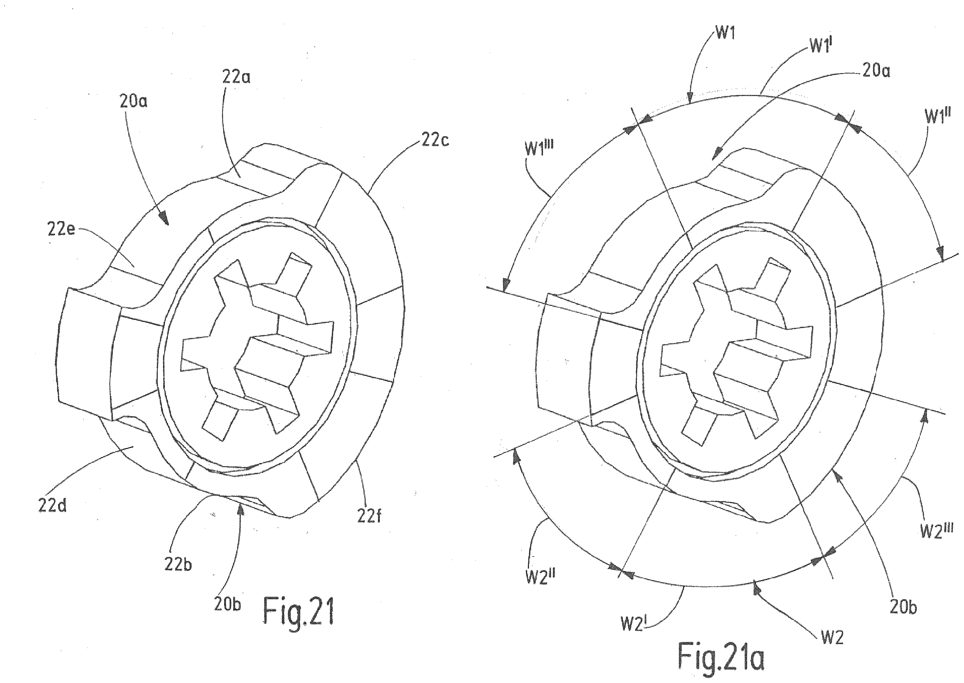

Eine derartige Ausbildung einer Steuereinheit 10f als Wegeventil mit der Funktion der Steuerung von zwei in Korrelation zueinander befindlicher Hydraulikkreise ist in den Figuren 14 bis 20 dargestellt. In den Figuren 21 und 21a ist eine Ausführungsform des Steuerelements 16f dargestellt wie es in den Figuren 18 bis 20 zu erkennen ist. Dieses Steuerelement 16f weist wiederum die bereits vorstehend beschriebenen Steuerprofile 20a und 20b auf, welche diametral gegenüberliegend vorgesehen sind, so dass sich in der Mittel- oder Neutralstellung des Betätigungsorgans 3 die beiden Ventilelemente 15a, 15b in ihrer untersten Stellung, also in ihrer ersten Steuerposition, befinden.

Durch eine geeignete Ausbildung dieser Steuereinheit 10f, vorzugsweise mit einer Federrückstellung des Betätigungsorgans 3 in eine Mittelposition, mit einer entsprechenden Form der Steuerprofile 20a und 20b des Steuerelements 16f kann die Steuereinheit 10f nicht nur, wie oben beschrieben, mit einer Schaltfunktion versehen werden, sondern auch als Wegeventil fungieren.

Die Darstellung der Figur 18 zeigt das Steuerelement 16f in einer ersten, der Schaltposition des Betätigungsorgans 3, wie in Figur 14 zu erkennen, entsprechenden mittleren Stellung. In dieser Stellung des Steuerelements 16f greifen die Betätigungszapfen 15a' und 15b' der Ventilelemente 15a und 15b jeweils in eine Vertiefung 22a bzw. 22b (siehe Figur 21) des Steuerelements 16f ein. Die beiden Ventilelemente 15a und 15b befinden sich somit in ihrer untersten Stellung, die Durchgänge zwischen der ersten Anschlussöffnung 12a und der zweiten Anschlussöffnung 12b des ersten Hydraulikkreislaufs sowie der dritten Anschlussöffnung 12c und der vierten Anschlussöffnung 12d des zweiten Hydraulikkreislaufs sind in dieser ersten Steuerposition somit geschlossen, es kann zwischen den Anschlussöffnungen 12a und 12d kein Hydraulikmedium strömen, die beiden Hydraulikkreisläufe 12a-12b und 12c-12d sind geschlossen.

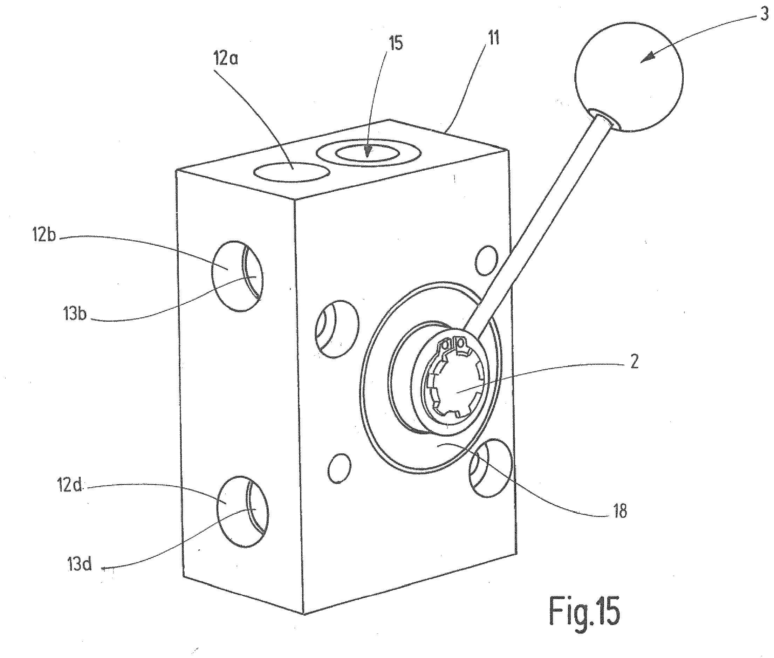

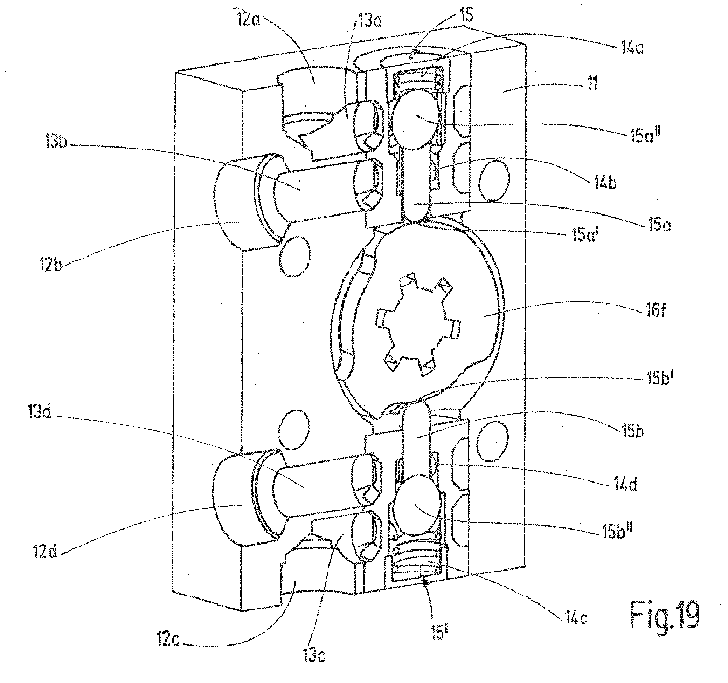

Wird nun, wie in Figur 15 und Figur 19 zu sehen ist, das Betätigungsorgan 3 von der ersten Schaltstellung (Figur 14) in einem definierten Winkelbereich, entgegen dem Uhrzeigersinn, in eine zweite Schaltstellung (Figur 15) nach oben bewegt, überträgt sich diese Drehbewegung über die Betätigungswelle 2 auf das drehfest mit der Betätigungswelle 2 verbundene Steuerelement 16f, welches sich dann in Korrelation zum Betätigungsorgan 3 von einem ersten Winkelteilbereich W1' bzw. W2' der Winkelbereiche W1 bzw. W2 ausgehend um einen zweiten Winkelteilbereich W1" bzw. W2" (siehe Figur 21a) in seine zweite Schaltposition bewegt. Auch in dieser Stellung des Steuerelements 16f gleiten die Betätigungszapfen 15a' und 15b' der Ventilelemente 15a und 15b auf den Steuerprofilen 20a und 20b des Steuerelements 16f auf und folgen somit der Kontur dieser Steuerprofile 20a bzw. 20b. In dieser zweiten Stellung des Steuerelements 16f befindet sich - wie aus Figur 19 ersichtlich - der Betätigungszapfen 15a' des Ventilelements 15a auf einer Erhöhung 22c des Steuerprofils 20a und der Betätigungszapfen 15b' des Ventilelements 15b in einer Vertiefung 22d des Steuerprofils 20b. Das Ventilelement 15a befindet sich somit in seiner obersten Stellung während sich das Ventilelement 15b in seiner untersten Stellung befindet. Der Durchgang 14 zwischen der ersten Anschlussöffnung 12a und der zweiten Anschlussöffnung 12b des ersten Hydraulikkreislaufs ist somit geöffnet, während der Durchgang 14' zwischen der dritten Anschlussöffnung 12c und der vierten Anschlussöffnung 12d des zweiten Hydraulikkreislaufs geschlossen ist. Somit kann zwischen den Anschlussöffnungen 12a und 12b ein Hydraulikmedium strömen, während zwischen den Anschlussöffnungen 12c und 12d kein Hydraulikmedium strömen kann. Der erste Hydraulikkreis 12a-12b ist geöffnet und der zweite Hydraulikkreis 12c-12d ist in dieser zweiten Steuerposition der Steuereinheit 16f geschlossen. Durch eine Bewegung des Betätigungsorgans 3 von seiner zweiten in seine erste Schaltposition, die bei der vorzugsweise vorgesehenen Federrückstellung des Betätigungsorgans 3 durch ein einfaches Loslassen ausgelöst werden kann, bewegen sich das Betätigungsorgan 3 und somit auch das drehfest mit der Betätigungswelle 2 verbundene Steuerelement 16f im Uhrzeigersinn wieder in ihre Ausgangslagen gemäß Figur 18 zurück, die Steuereinheit 16f gelangt also von ihrer zweiten Steuerposition in ihre erste Steuerposition. Die Betätigungszapfen 15a' und 15b' der Ventilelemente 15a und 15b folgen dabei wieder den Steuerprofilen 20a und 20b des Steuerelements 16f in die Vertiefungen 22a, 22b der Steuerprofile 20a und 20b. Die Ventilelemente 15a, 15b befinden sich dann wieder in ihrer untersten Stellung und die Verbindungen zwischen den Anschlussöffnungen 12a und 12b und 12c und 12d der beiden Hydraulikkreise sind geschlossen und es kann kein Hydraulikmedium strömen.

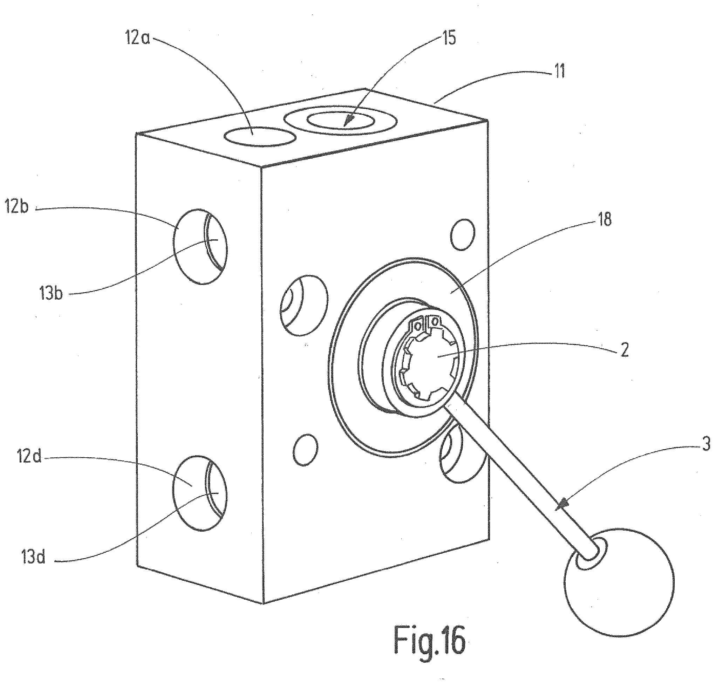

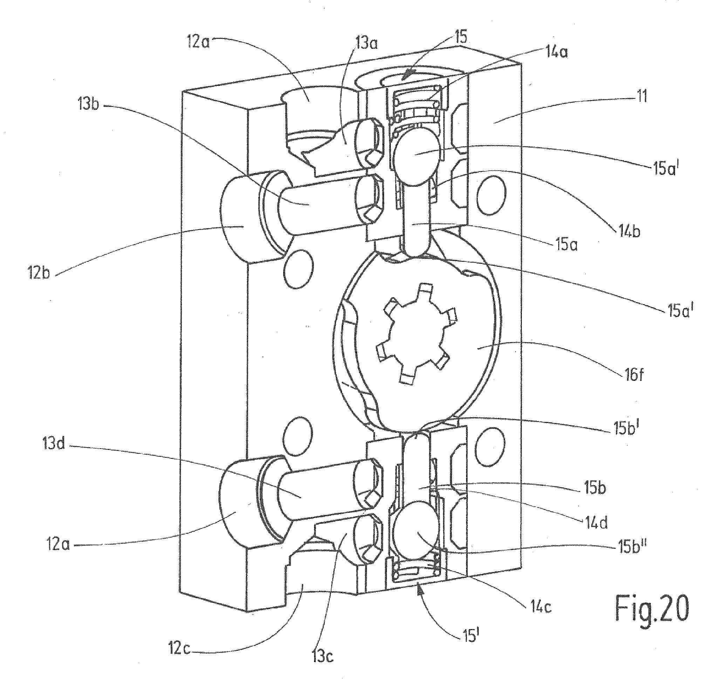

Wird nun, wie in Figur 16 und Figur 20 zu sehen ist, das Betätigungsorgan 3 von der ersten Stellung um einem definierten Winkelbereich im Uhrzeigersinn in eine dritte Schaltstellung nach unten bewegt, überträgt sich diese Drehbewegung über die Betätigungswelle 2 auf das drehfest mit der Betätigungswelle verbundene Steuerelement 16f, welches sich dann in Korrelation zum Betätigungsorgan 3, ausgehend vom ersten Winkelteilbereich W1' bzw. W2' des Winkelbereichs W1 bzw. W2 der Steuerprofile 20a bzw. 20b des Steuerelements 16f, um einen dritten Winkelteilbereich W1''' bzw. W2''' in seine dritte Steuerposition bewegt. Die Betätigungszapfen 15a' und 15b' der Ventilelemente 15a und 15b gleiten auf den Steuerprofilen 20a und 20b des Steuerelements 16f auf und folgen somit der Kontur dieser Steuerprofile 20a, 20b. In dieser dritten Steuerposition des Steuerelements 16f befindet sich der Betätigungszapfen 15a' des Ventilelements 15a in einer Vertiefung 22e des Steuerprofils 20a und der Betätigungszapfen 15b' des Ventilelements 15b auf einer Erhöhung 22f des Steuerprofils 20b. Das Ventilelement 15a befindet sich somit in seiner untersten Stellung während sich das Ventilelement 15b in seiner obersten Stellung befindet. Der Durchgang 14 zwischen der ersten Anschlussöffnung 12a und der zweiten Anschlussöffnung 12b des ersten Hydraulikkreises ist somit geschlossen, während der Durchgang 14' zwischen der dritten Anschlussöffnung 12c und der vierten Anschlussöffnung 12d des zweiten Hydraulikkreises geöffnet ist. Somit kann zwischen den Anschlussöffnungen 12a und 12b kein Hydraulikmedium strömen, während zwischen den Anschlussöffnungen 12c und 12d ein Hydraulikmedium strömen kann. Der erste Hydraulikkreis 12a-12b ist in dieser dritten Steuerposition der Steuereinheit 16f geschlossen und der zweite Hydraulikkreis 12c-12d ist geöffnet.

Durch eine entsprechende Bewegung des Betätigungsorgans 3, welche bei der bevorzugt eingesetzten Federrückstellung dieses Betätigungsorgans 3 einfach durch ein Loslassen desselben initiiert werden kann, bewegen sich das Betätigungsorgan 3 und somit auch das drehfest mit der Betätigungswelle 2 verbundene Steuerelement 16 entgegen des Uhrzeigersinns wieder in ihre Ausgangslagen gemäß Figur 18, also in seine erste Steuerposition, zurück. Die Betätigungszapfen 15a' und 15b' der Ventilelemente 15a und 15b folgen dabei wieder den Steuerprofilen 20a und 20b des Steuerelements 16f in die Vertiefungen 22a, 22b der Steuerprofile 20a und 20b. Die Ventilelemente 15a, 15b befinden sich dann wieder in ihrer untersten Stellung und die Verbindungen zwischen den Anschlussöffnungen 12a-12b und 12c-12d der beiden Hydraulikkreise sind in dieser ersten Steuerposition der Steuereinheit 16f geschlossen und es kann kein Hydraulikmedium strömen.

## Patentansprüche

1. Steuereinheit für eine Steuerungsvorrichtung für ein Schwerlast-Fahrzeug, die einen Grundkörper (11) mit zwei Anschlussöffnungen (12a, 12b) besitzt, an die Leitungen für ein Hydraulikmedium eines ersten Hydraulikkreislaufs anschließbar sind, wobei ein erster Kanal (13a) von der ersten Anschlussöffnung (12a) zu einer ersten Kammer (14a) und ein zweiter Kanal (13b) von der zweiten Anschlussöffnung (12b) zu einer zweiten Kammer (14b) führt, wobei Durchgang (14) zwischen diesen beiden Kammern (14a, 14b) des ersten Hydraulikkreislaufs durch ein Ventilelement (15a) öffen- und schließbar ist, wobei der Grundkörper (11) mindestens zwei weitere Anschlussöffnungen (12c, 12d) mindestens eines zweiten Hydraulikkreislaufs besitzt, an die weitere Leitungen für ein Hydraulikmedium anschließbar sind, wobei ein dritter Kanal (13c) von einer dritten Anschlussöffnung (12c) zu einer dritten Kammer (14c) und ein vierter Kanal (13d) von einer vierten Anschlussöffnung (12d) zu einer vierten Kammer (14d) führt, wobei ein Durchgang (14') zwischen diesen beiden Kammern (14c, 14d) dieses zweiten Hydraulikkreislaufs durch ein weiteres Ventilelement (15b) öffen- und schließbar ist, wobei in einem Aufnahmeraum (17) des Grundkörpers (11) der Steuereinheit (10a-10e; 10f) ein von einem Betätigungsorgan (3) bewegbares, auf einer Betätigungswelle (2) angeordnetes Steuerelement (16a-16e; 16f) vorgesehen ist, welches mindestens ein Steuerprofil (20a, 20b) aufweist, welches oder welche in Wirkeingriff mit den Ventilelementen (15a, 15b) steht oder stehen, **dadurch gekennzeichnet, dass** durch eine durch die Drehbewegung der Betätigungswelle (2) bewirkte Bewegung des Steuerelements (16a-16e; 16f) das Ventilelement (15a) des ersten Hydraulikkreislaufs und korreliert hierzu das weitere Ventilelement (15b) des mindestens einen zweiten Hydraulikkreislaufs durch das oder die Steuerprofile (20a, 20b) zumindest von einer ersten Steuerposition in eine zweite Steuerposition bewegbar sind.

2. Steuereinheit nach Anspruch 1, **dadurch gekennzeichnet, dass** das Ventilelement (15a) des ersten Hydraulikkreislaufs und korreliert hierzu das zweite Ventilelement (15b) des mindestens einen zweiten Hydraulikkreislaufs durch das oder die Steuerprofile (20a, 20b) in mindestens eine weitere Steuerposition bewegbar sind.

3. Steuereinheit nach einem der vorangehenden Ansprüche, **dadurch gekennzeichnet, dass** in mindestens einer Steuerposition der Durchgang (14) zwischen den beiden Kammern (14a, 14b) des ersten Hydraulikkreislaufs und/oder zwischen den beiden Kammern (14c, 14d) des zweiten Hydraulickreislaufs geschlossen ist.

4. Steuereinheit nach einem der vorangehenden Ansprüche, **dadurch gekennzeichnet, dass** in mindestens einer Steuerposition der Durchgang (14) zwischen den beiden Kammern (14a, 14b) des ersten Hydraulikkreislaufs und/oder zwischen den beiden Kammern (14c, 14d) des zweiten Hydraulickreislaufs ganz oder zumindest teilweise geöffnet ist.

5. Steuereinheit nach einem der vorangehenden Ansprüche, **dadurch gekennzeichnet, dass** das Hydraulikfluid mindestens eines Hydraulikkreislaufs, welches der Steuereinheit (10a-10e; 10f) über eine Anschlussöffnung (12a; 12c) zugeführt wird, zu mindestens einer ein Ausgang der Steuereinheit (10a-10e; 10f) ausbildenden Anschlussöffnung (12b; 12c) der Steuereinheit (10a-10e; 10f) gesteuert und/oder geregelt zugeführt ist.

6. Steuereinheit nach einem der vorangehenden Ansprüche, **dadurch gekennzeichnet, dass** mindestens ein Ventilelement (15a, 15b) durch ein Rückstellelement (15c) zumindest von seiner zweiten Steuerposition in seine erste Steuerposition rückstellbar ist.

7. Steuereinheit nach einem der vorangehenden Ansprüche, **dadurch gekennzeichnet, dass** das oder die Steuerprofile (20a, 20b) auf einer Umfangsfläche des im Grundkörper (11) drehbeweglich angeordneten Steuerelements (16a-16e; 16f) angeordnet sind.

8. Steuereinheit nach einem der vorangehenden Ansprüche, **dadurch gekennzeichnet, dass** die Steuereinheit (10a-10e; 10f) als ein Schaltventil oder als ein Wegeventil ausgebildet ist.

9. Steuerungsvorrichtung für ein Schwerlast-Fahrzeug, zur Steuerung und/oder Regelung von mindestens zwei Hydraulikkreisläufen, wobei die Steuerungsvorrichtung mindestens eine von einem Betätigungsorgan (3) der Steuerungsvorrichtung (1) betätigbare Steuereinheit (10a-10e; 10f) besitzt, **dadurch gekennzeichnet, dass** die oder mindestens eine der Steuereinheiten (10a-10e; 10f) der Steuerungsvorrichtung (1) gemäß einem der Ansprüche 1 bis 8 ausgebildet ist oder sind.

10. Steuerungsvorrichtung nach Anspruch 9, **dadurch gekennzeichnet, dass** die Steuerungsvorrichtung (1) mindestens zwei Steuereinheiten (10a-10e; 10f) aufweist, und dass jede Steuereinheit (10a-10e; 10f) ein Steuerelement (16a-16e; 16f) besitzt, und dass die mindestens zwei Steuereinheiten (10a-10e; 10f) gleichzeitig von dem Betätigungsorgan (3) der Steuerungsvorrichtung (1) durch eine Betätigungswelle (2) betätigbar sind, insbesondere auf der gemeinsamen Betätigungswelle (2) angeordnet sind.

11. Steuerungsvorrichtung nach einem der Ansprüche 9 oder 10, **dadurch gekennzeichnet, dass** mindestens ein Steuerelement (16a-16e; 16f) mindestens einer Steuereinheit (10a-10e; 10f) mindestens ein Steuerprofil (20a, 20b) aufweist, das sich über einen definierten Winkelbereich des Steuerelements (16a-16e; 16f) erstreckt, wobei dieser Winkelbereich des Steuerprofils (20a, 20b) mit dem Winkelbereich des Betätigungsorgans (3), der durch eine erste und eine zweite Schaltposition dieses Betätigungsorgans (3) begrenzt ist, korreliert ist.

12. Steuerungsvorrichtung nach einem der Ansprüche 9 bis 11, **dadurch gekennzeichnet, dass** die Steuerungsvorrichtung eine Steuerungsvorrichtung für einen Schwanenhals, eine Hubanordnung oder eine aktiv gelenkte Radanordnung eines Schwerlast-Fahrzeugs ist.

13. Verfahren zur Steuerung einer hydraulisch angetriebenen Baugruppe, bei dem ein diese Baugruppe antreibendes Hydraulikmedium von einer Steuerungsvorrichtung (1) gesteuert und/oder geregelt ist, **dadurch gekennzeichnet, dass** zur Steuerung und/oder Regelung des in mindestens einem Hydraulikkreis flie-βenden Hydraulikmediums eine Steuerungsvorrichtung (1) gemäß einem der Ansprüche 9 bis 12 verwendet wird.

14. Verfahren nach Anspruch 13, **dadurch gekennzeichnet, dass** das Verfahren zur Steuerung einer Baugruppe eines Schwerlast-Fahrzeugs wie einen Schwanenhals, eine Hubanordnung oder eine Lenkanordnung verwendet wird,

## Claims

1. Control unit for a control device for a heavy-duty vehicle, which has a base body (11) with two connection openings (12a, 12b) to which lines for a hydraulic medium of a first hydraulic circuit can be connected, wherein a first channel (13a) leads from the first connection opening (12a) to a first chamber (14a) and a second channel (13b) leads from the second connection opening (12b) to a second chamber (14b), wherein a passage (14) between these two chambers (14a, 14b) of the first hydraulic circuit can be opened and closed by a valve element (15a), wherein the base body (11) has at least two further connection openings (12c, 12d) of at least one second hydraulic circuit to which further lines for a hydraulic medium can be connected, wherein a third channel (13c) leads from the third connection opening (12c) to a third chamber (14c) and a fourth channel (13d) leads from the fourth connection opening (12d) to a fourth chamber (14d), wherein a passage (14') between these two chambers (14c, 14d) of this second hydraulic circuit can be opened and closed by a further valve element (15b), wherein in a receiving space (17) of the base body (11) of the control unit (10a-10e; 10f) a control element (16a-16e; 16f), which can be moved by an actuating element (3), being arranged on an actuating shaft (2), is provided, which has at least one control profile (20a, 20b) which stands or which stand in operative engagement with the valve elements (15a, 15b), **characterized in that** by a movement of the control element (16a-16e; 16f) effected by a rotational movement of the actuating element (3) the valve element (15a) of the first hydraulic circuit and in correlation thereto the further valve element (15b) of the at least one second hydraulic circuit can be moved by the control profile or the control profiles (20a, 20b) at least from a first control position into a second control position.

2. Control unit according to claim 1, **characterized in that** the valve element (15a) of the first hydraulic circuit and, correlated thereto, the second valve element (15b) of the at least one second hydraulic circuit can be moved by the control profile or the control profiles (20a, 20b) into at least one further control position.

3. Control unit according to one of the preceding claims, **characterized in that** in at least one control position the passage (14) between the two chambers (14a, 14b) of the first hydraulic circuit and/or between the two chambers (14c, 14d) of the second hydraulic circuit is closed.

4. Control unit according to one of the preceding claims, **characterized in that** in at least one control position the passage (14) between the two chambers (14a, 14b) of the first hydraulic circuit and/or between the two chambers (14c, 14d) of the second hydraulic circuit is wholly or at least partially open.

5. Control unit according to one of the preceding claims, **characterized in that** the hydraulic fluid of at least one hydraulic circuit, which is fed to the control unit (10a-10e; 10f) via said connection opening (12a; 12c), is fed to at least one connection opening (12b; 12c) of the control unit (10a-10e; 10f) forming an output of the control unit (10a-10e; 10f) in a controlled and/or regulated manner.

6. Control unit according to one of the preceding claims, **characterized in that** at least one valve element (15a, 15b) can be reset by a reset element (15c) at least from its second control position to its first control position.

7. Control unit according to one of the preceding claims, **characterized in that** the control profile or the control profiles (20a, 20b) are arranged on a circumferential surface of the control element (16a-16e; 16f) rotatably arranged in the base body (11).

8. Control unit according to one of the preceding claims, **characterized in that** the control unit (10a-10e; 10f) is designed as a switching valve or as a directional control valve.

9. Control device for a heavy-duty vehicle, for controlling and/or regulating at least two hydraulic circuits, the control device having at least one control unit (10a-10e; 10f) which can be actuated by an actuating member (3) of the control device (1), **characterized in that** the or at least one of the control units (10a-10e; 10f) of the control device (1) is or are designed according to one of Claims 1 to 8.

10. Control device according to claim 9, **characterized in that** the control device (1) has at least two control units (10a-10e; 10f), and that each control unit (10a-10e; 10f) has a control element (16a-16e; 16f), and that the at least two control units (10a-10e; 10f) can be actuated simultaneously by the actuating member (3) of the control device (1) by an actuating shaft (2), in particular are arranged on the common actuating shaft (2).

11. Control device according to one of claims 9 or 10, **characterized in that** at least one control element (16a-16e; 16f) of at least one control unit (10a-10e; 10f) has at least one control profile (20a, 20b), which extends over a defined angular range of the control element (16a-16e; 16f), this angular range of the control profile (20a, 20b) being correlated with the angular range of the actuating member (3), which is limited by a first and a second switching position of this actuating member (3).

12. Control device according to one of Claims 9 to 11, **characterized in that** the control device is a control device for a goose neck, a lifting arrangement or an actively steered wheel arrangement of a heavy-duty vehicle.

13. Method for controlling a hydraulically driven assembly, in which a hydraulic medium driving this assembly is controlled and/or regulated by a control device (1), **characterized in that** for controlling and/or regulating a control device (1) according to one of claims 9 to 12 is used.

14. Method according to Claim 13, **characterized in that** the method is used to control an assembly of a heavy-duty vehicle such as a goose neck, a lifting arrangement or a steering arrangement.

## Revendications

1. Unité de commande pour un dispositif de commande pour un poids lourd, qui possède un corps de base (11) avec deux ouvertures de raccordement (12a, 12b), auxquelles des conduites pour un milieu hydraulique d'un premier circuit hydraulique peuvent être raccordées, dans laquelle un premier canal (13a) mène de la première ouverture de raccordement (12a) à une première chambre (14a) et un deuxième canal (13b) mène de la deuxième ouverture de raccordement (12b) à une deuxième chambre (14b), dans laquelle un passage (14) entre ces deux chambres (14a, 14b) du premier circuit hydraulique peut être ouvert et fermé par un élément de soupape (15a), dans laquelle
le corps de base (11) possède au moins deux autres ouvertures de raccordement (12c, 12d) au moins d'un second circuit hydraulique, auxquelles d'autres conduites pour un milieu hydraulique peuvent être raccordées, dans laquelle un troisième canal (13c) mène d'une troisième ouverture de raccordement (12c) à une troisième chambre (14c) et un quatrième canal (13d) mène d'une quatrième ouverture de raccordement (12d) à une quatrième chambre (14d), dans laquelle un passage (14') entre ces deux chambres (14c, 14d) de ce second circuit hydraulique peut être ouvert et fermé par un autre élément de soupape (15b), dans laquelle
dans un espace de réception (17) du corps de base (11) de l'unité de commande (10a-10e ; 10f) un élément de commande (16a-16e ; 16f) agencé sur un arbre d'actionnement (2), mobile par un organe d'actionnement (3) est prévu, lequel présente au moins un profilé de commande (20a, 20b) qui est ou sont en prise active avec les éléments de soupape (15a, 15b),
**caractérisée en ce que**
par un mouvement de l'élément de commande (16a-16e ; 16f), provoqué par le mouvement de rotation de l'arbre d'actionnement (2), l'élément de soupape (15a) du premier circuit hydraulique et de manière corrélée l'autre élément de soupape (15b) d'au moins un second circuit hydraulique sont mobiles par le ou les profilés de commande (20a, 20b) au moins d'une première position de commande dans une seconde position de commande.

2. Unité de commande selon la revendication 1, **caractérisée en ce que** l'élément de soupape (15a) du premier circuit hydraulique et de manière corrélée le second élément de soupape (15b) de l'au moins un second circuit hydraulique sont mobiles par le ou les profilés de commande (20a, 20b) dans au moins une autre position de commande.

3. Unité de commande selon l'une des revendications précédentes, **caractérisée en ce que** dans au moins une position de commande le passage (14) entre les deux chambres (14a, 14b) du premier circuit hydraulique et/ou entre les deux chambres (14c, 14d) du second circuit hydraulique est fermé.

4. Unité de commande selon l'une des revendications précédentes, **caractérisée en ce que** dans au moins une position de commande le passage (14) entre les deux chambres (14a, 14b) du premier circuit hydraulique et/ou entre les deux chambres (14c, 14d) du second circuit hydraulique est ouvert entièrement ou au moins partiellement.

5. Unité de commande selon l'une des revendications précédentes, **caractérisée en ce que** le fluide hydraulique au moins d'un circuit hydraulique qui est amené à l'unité de commande (10a-10e ; 10f) par le biais d'une ouverture de raccordement (12a ; 12c), est amené de manière commandée et/ou régulée à au moins une ouverture de raccordement (12b ; 12c) réalisant une sortie de l'unité de commande (10a-10e ; 10f) de l'unité de commande (10a-10e ; 10f).

6. Unité de commande selon l'une des revendications précédentes, **caractérisée en ce qu'**au moins un élément de soupape (15a, 15b) peut être rappelé par un élément de rappel (15c) au moins de sa seconde position de commande dans sa première position de commande.

7. Unité de commande selon l'une des revendications précédentes, **caractérisée en ce que** le ou les profilés de commande (20a, 20b) sont agencés sur une surface périphérique de l'élément de commande (16a-16e ; 16f) agencé dans le corps de base (11) de manière mobile en rotation.

8. Unité de commande selon l'une des revendications précédentes, **caractérisée en ce que** l'unité de commande (10a-10e ; 10f) est réalisée comme une soupape de commutation ou comme une soupape de distribution.

9. Dispositif de commande pour un poids lourd, pour la commande et/ou la régulation d'au moins deux circuits hydrauliques, dans lequel le dispositif de commande possède au moins une unité de commande (10a-10e ; 10f) actionnable par un organe d'actionnement (3) du dispositif de commande (1), **caractérisé en ce que** la ou au moins une des unités de commande (10a-10e ; 10f) du dispositif de commande (1) est ou sont formées selon l'une des revendications 1 à 8.

10. Dispositif de commande selon la revendication 9, **caractérisé en ce que** le dispositif de commande (1) présente au moins deux unités de commande (10a-10e ; 10f), et que chaque unité de commande (10a-10e ; 10f) possède un élément de commande (16a-16e ; 16f), et que les au moins deux unités de commande (10a-10e ; 10f) sont simultanément actionnables par l'organe d'actionnement (3) du dispositif de commande (1) par un arbre d'actionnement (2), en particulier sont agencées sur l'arbre d'actionnement (2) commun.

11. Dispositif de commande selon l'une des revendications 9 ou 10, **caractérisé en ce qu'**au moins un élément de commande (16a-16e ; 16f) au moins d'une unité de commande (10a-10e ; 10f) présente au moins un profilé de commande (20a, 20b) qui s'étend sur une plage angulaire définie de l'élément de commande (16a-16e ; 16f), dans lequel cette plage angulaire du profilé de commande (20a, 20b) est corrélée avec la plage angulaire de l'organe d'actionnement (3) qui est délimitée par une première et une seconde position de commutation de cet organe d'actionnement (3).

12. Dispositif de commande selon l'une des revendications 9 à 11, **caractérisé en ce que** le dispositif de commande est un dispositif de commande pour un col de cygne, un agencement de levage ou un agencement de roue à direction active d'un poids lourd.

13. Procédé de commande d'un ensemble entraîné de manière hydraulique, pour lequel un milieu hydraulique entraînant cet ensemble est commandé et/ou régulé par un dispositif de commande (1), **caractérisé en ce que**, pour la commande et/ou la régulation du milieu hydraulique s'écoulant dans au moins un circuit hydraulique, un dispositif de commande (1) est utilisé selon l'une des revendications 9 à 12.

14. Procédé selon la revendication 13, **caractérisé en ce que** le procédé est utilisé pour la commande d'un ensemble d'un poids lourd comme un col de cygne, un agencement de levage ou un agencement de direction.
